# EUROPÄISCHE PATENTANMELDUNG

(11) **EP 4 520 151 A1**
(43) Veröffentlichungstag der Anmeldung: **12.03.2025**
(21) Anmeldenummer: 24401020.3
(22) Anmeldetag: 19.08.2024
(51) Int. Cl.: A01B 39/18, A01M 21/02, A01B 49/02

(54) **BODENBEARBEITUNGSGERÄT**

(30) Priorität: 08.09.2023 DE 102023124221
(71) Anmelder: Amazonen-Werke H. Dreyer SE & Co. KG, 49205 Hasbergen (DE)
(72) Erfinder: Johannaber, Stefan Jan, 49205 Hasbergen (DE); Breuer, Jan Henrik, 49205 Hasbergen (DE); Kubut, Oliver, 49205 Hasbergen (DE)

(57) **Zusammenfassung**

Die Erfindung betrifft ein Bodenbearbeitungsgerät zur Bodenbearbeitung zwischen in Pflanzreihen (R) angebauten Nutzpflanzen (N), mit mindestens einem Bodenbearbeitungsaggregat (3) zur Bodenbearbeitung innerhalb der Pflanzreihen (R), welches zwei über Schwenkausleger (4.1, 4.2) quer zu den Pflanzreihen (R) verschwenkbare Aggregatwerkzeuge (3.1, 3.2) aufweist, denen jeweils ein separater Schwenkantrieb (5.1, 5.2) zugeordnet ist, wobei das Bodenbearbeitungsaggregat (3) einen Werkzeugantrieb (6) zum Antrieb der Aggregatwerkzeuge (3.1, 3.2) aufweist.

## Beschreibung

Die vorliegende Erfindung befasst sich mit einem Bodenbearbeitungsgerät zur Bodenbearbeitung zwischen in Pflanzreihen angebauten Nutzpflanzen, mit mindestens einem Bodenbearbeitungsaggregat zur Bodenbearbeitung innerhalb der Pflanzreihen, welches zwei über Schwenkausleger quer zu den Pflanzreihen verschwenkbare Aggregatwerkzeuge aufweist, denen jeweils ein separater Schwenkantrieb zugeordnet ist.

Bodenbearbeitungsgeräte werden im landwirtschaftlichen Pflanzenbau in verschiedenen Ausführungen für zahlreiche unterschiedliche Zwecke eingesetzt. Hierzu zählen insbesondere die mechanische Einebnung, Lockerung oder Verfeinerung des Bodens oder auch das Einarbeiten von organischem Material wie Unkraut oder Ernterückständen in den Boden der jeweiligen Nutzfläche. Die Bodenbearbeitungsgeräte können dabei insbesondere an die Beschaffenheit der Nutzfläche, den Zeitpunkt in der Vegetationsperiode oder die Art der angebauten Nutzpflanzen angepasst sein.

Insbesondere in voneinander beabstandet verlaufenden Pflanzreihen angebaute Nutzpflanzen, wie beispielsweise Mais, Rüben, Kartoffeln oder Feldgemüse, erfordern in der Regel spezielle Bodenbearbeitungsgeräte. Solche Bodenbearbeitungsgeräte werden typischerweise mittels Ackerschleppern oder Traktoren entlang einer Bearbeitungsrichtung, welche üblicherweise der Ausrichtung der Pflanzreihen entspricht, über die Nutzfläche gezogen oder sind selbstfahrend, in zunehmendem Maße auch autonom selbstfahrend, ausgebildet.

Neben der Bearbeitung des Bodens zwischen den Pflanzreihen ist es - je nach Art und Ausdehnung der jeweiligen Nutzpflanzen - bei solchen Reihenkulturen oftmals auch wünschenswert oder sogar erforderlich, die Bodenbereiche zwischen den einzelnen Nutzpflanzen innerhalb der Pflanzreihen zu bearbeiten. Zu diesem Zweck weisen moderne Bodenbearbeitungsgeräte häufig ein Bodenbearbeitungsaggregat zur Bodenbearbeitung innerhalb der Pflanzreihen auf. Solche Bodenbearbeitungsaggregate können in der Regel zwei oder mehr schar- oder zinkenartige Aggregatwerkzeuge aufweisen, welche bedarfsweise zwischen die Nutzpflanzen einer Pflanzreihe bewegt werden können und welche innerhalb der Pflanzreihe für eine mechanische Bodenbearbeitung sorgen. Entsprechende Bodenbearbeitungsaggregate sind beispielsweise in der EP 3 610 712 B1 oder der WO 2021/ A1 beschrieben.

Typischerweise sind die starren, passiven Aggregatwerkzeuge bei solchen Bodenbearbeitungsgeräten über Schwenkausleger mit dem Bodenbearbeitungsaggregat verbunden. Den Schwenkauslegern kann jeweils ein eigener Schwenkantrieb zugeordnet sein, so dass diese unabhängig von einander verschwenkt werden können. In der Regel werden die Schwenkausleger einschließlich der daran angeordneten Aggregatwerkzeuge gegensinnig in die Pflanzreihe geschwenkt, so dass der Boden zwischen den Pflanzen in der Pflanzreihe mittels der Aggregatwerkzeuge bearbeitet werden kann. Vorteilhafterweise erlauben separate Schwenkantriebe den Schwenkauslegern unterschiedliche Schwenkwinkel, worüber beispielsweise ein außermittiger Versatz der jeweiligen Pflanzreihe kompensiert werden kann.

Bodenbearbeitungsgeräte mit Bodenbearbeitungsaggregaten, welche auch als Zusatz- oder Querbearbeitungsaggregate bezeichnet werden können, erlauben eine gründlichere und flächendeckendere Bodenbearbeitung im Vergleich zu Bodenbearbeitungsgeräten, welche nur zwischen den Pflanzreihen arbeiten. Bei der landwirtschaftlichen Bodenbearbeitung haben sich die starren Aggregatwerkzeuge jedoch unter ungünstigen Umgebungsbedingungen als unzureichend erwiesen. Insbesondere bei schwer zu bearbeitenden Böden oder Böden mit starkem Unkrautbewuchs kann das Ergebnis der Bodenbearbeitung mit solchen starren Bodenbearbeitungsgeräten unbefriedigend sein.

Vor diesem Hintergrund stellt sich die Erfindung die **Aufgabe,** ein Bodenbearbeitungsgerät mit Bodenbearbeitungsaggregat anzugeben, welches auch unter widrigen Umgebungsbedingungen auf zuverlässige Art und Weise eine effektive Bodenbearbeitung zwischen den Pflanzen einer Pflanzreihe ermöglicht.

Diese Aufgabe wird bei einem Bodenbearbeitungsgerät der vorstehend genannten Art durch die Merkmale des Patentanspruchs 1 **gelöst**. Vorteilhafte Weiterbildungen sind in den abhängigen Unteransprüchen angegeben.

Das Bodenbearbeitungsaggregat weist einen Werkzeugantrieb zum Antrieb der Aggregatwerkzeuge auf. Eine solche Ausgestaltung ermöglicht eine zuverlässige mechanische Bodenbearbeitung zwischen den Pflanzen einer Pflanzreihe durch die von dem Werkzeugantrieb angetriebenen Aggregatwerkzeuge.

In einer vorteilhaften Weiterbildung der Erfindung wird vorgeschlagen, dass die Aggregatwerkzeuge über den Werkzeugantrieb drehend, insbesondere gegensinnig drehend, antreibbar sind. Eine solche Ausgestaltung erlaubt einerseits eine zuverlässige Bodenbearbeitung. Andererseits können Drehbewegungen auf besonders einfache und kraftverlustarme Art und Weise von dem Werkzeugantrieb auf die Aggregatwerkzeuge übertragen werden. Es ergibt sich ein wartungsarmer Aufbau. Anstatt gegensinniger Drehbewegungen können die Aggregatwerkzeuge auch gleichsinnig drehbar angetrieben sein. Vorteilhaft kann zudem eine Drehrichtungsumkehr, etwa zur Entfernung von Verstopfungen der Aggregatwerkzeuge, sein. Es kann in einer alternativen Ausgestaltung auch von Vorteil sein, für jedes Aggregatwerkzeug einen separaten Werkzeugantrieb zu verbauen.

In diesem Zusammenhang hat es sich als vorteilhaft erwiesen, wenn sich die Drehachsen der Aggregatwerkzeuge im Wesentlichen vertikal erstrecken. Es ergibt sich ein kinematisch einfacher Aufbau für definierte Drehbewegungen. In gewissen Anwendungsfällen kann es jedoch auch vorteilhaft sein, wenn sich die Drehachsen schräg zur Vertikalen, beispielsweise in Bearbeitungsrichtung geneigt, erstrecken.

Eine vorteilhafte Ausgestaltung sieht in diesem Zusammenhang vor, dass die Aggregatwerkzeuge in Bearbeitungsrichtung versetzt angeordnet sind. Eine solche Anordnung hat den Vorteil, dass eine Kollision der Aggregatwerkzeuge beim jeweiligen Verschwenken leichter vermieden werden kann. Die Schwenkbahnen der Aggregatwerkzeuge weisen einen kleineren Überlappungsbereich auf. Ferner hat eine solche Anordnung den Vorteil, dass die angetriebenen Aggregatwerkzeuge nicht miteinander kämmen müssen. Ein Überschnitt über die von der jeweiligen Pflanzreihe vorgegebene, sich in Bearbeitungsrichtung erstreckende Nutzpflanzen-Mittellinie ist somit möglich, was insbesondere eine effektivere Unkrautbekämpfung ermöglicht. Vorteilhafterweise sind auch die Schwenkantriebe zum Verschwenken der Schwenkausleger entsprechend den Aggregatwerkzeugen in Bearbeitungsrichtung versetzt angeordnet, so dass auch zwischen den beiden Schwenkachsen der Schwenkantriebe ein entsprechender Versatz ausgebildet ist.

Des Weiteren wird vorgeschlagen, dass die Aggregatwerkzeuge über an den Schwenkauslegern angeordnete Antriebswellen mit dem Werkzeugantrieb wirkverbunden sind. Die Antriebswellen erlauben eine verlustarme Übertragung der Antriebskräfte von dem Werkzeugantrieb auf die Aggregatwerkzeuge.

In diesem Zusammenhang hat es sich als konstruktiv vorteilhaft herausgestellt, wenn die Antriebswellen von den Schwenkauslegern zumindest teilweise aufgenommen sind. Hierdurch ergibt sich ein gewisser Schutz der Antriebswellen vor Umwelteinflüssen wie Staub und Feuchtigkeit. Ein solcher Aufbau hat sich als vorteilhaft im Hinblick auf eine verbesserte Ausfallsicherheit erwiesen. Zudem können die rotierenden Antriebswellen auf diese Weise vor dem unbefugten Zugriff durch Bedienpersonal oder andere Personen abgeschirmt werden, was einer erhöhten Arbeitssicherheit zugutekommt.

Es hat sich ferner als vorteilhaft erwiesen, wenn die Aggregatwerkzeuge über die Schwenkausleger unabhängig voneinander verschwenkbar sind. Auf diese Weise lässt sich die Flexibilität der Bodenbearbeitung erhöhen. Insbesondere lassen sich die Positionen der Aggregatwerkzeuge auf den tatsächlichen Verlauf der Pflanzreihen anpassen. Im Falle von Abweichungen der Nutzpflanzen-Mittellinie lassen sich die Schwenkausleger entsprechend um unterschiedliche Schwenkwinkel verschwenken, um dem Versatz der Nutzpflanzen-Mittellinie Rechnung zu tragen. Es resultiert eine dem Versatz der Nutzpflanzen-Mittellinie angepasste asynchrone Verschwenkung der Schwenkarme und damit der Aggregatwerkzeuge.

Es hat sich als kinematisch vorteilhaft erwiesen, wenn sich die Schwenkachsen der Schwenkausleger im Wesentlichen vertikal erstrecken. Es ergeben sich steuerungs- und antriebstechnisch vorteilhaft einfache Schwenkbewegungen der Schwenkausleger.

Eine konstruktiv vorteilhafte Ausgestaltung sieht vor, dass sich die Schwenkausleger zwischen den Schwenkantrieben und den Aggregatwerkzeugen abgewinkelt, insbesondere S-förmig abgewinkelt, erstrecken. Über die Ausgestaltung der Schwenkausleger lässt sich die Schwenkbahn der Schwenkausleger bei Schwenkbewegungen um die Schwenkachsen beeinflussen. Je nach Anwendungsfall können auch anderweitig geformte Schwenkausleger vorteilhaft sein.

In diesem Zusammenhang wird vorgeschlagen, dass die an einem Bodenbearbeitungsaggregat angeordneten Schwenkausleger im Wesentlichen identisch ausgebildet sind. Hierdurch lassen sich auf kinematisch einfache Art und Weise kollisionsfreie Schwenkbewegungen realisieren. Ferner erhöht eine solche Ausgestaltung auch die Wartungsfreundlichkeit des Bodenbearbeitungsgeräts, da die Schwenkausleger gegeneinander austauschbar sind. Allerdings kann es auch vorteilhaft sein, wenn die an einem Bodenbearbeitungsaggregat angeordneten Schwenkausleger unterschiedlich ausgebildet sind, etwa zur Erzielung unterschiedlicher Schwenktrajektorien.

Als konstruktiv vorteilhaft hat es sich herausgestellt, wenn die Schwenkantriebe als Elektromotoren, insbesondere als Schrittmotoren, ausgebildet sind. Es resultiert ein wartungsfreundlicher, zuverlässiger Aufbau. Die Elektromotoren können vorteilhafterweise mit der Bordelektrik bzw. der Bordelektronik des Bodenbearbeitungsgeräts und/oder der Zugmaschine gekoppelt sein. Alternativ zu Elektromotoren können auch andere geeignete Motoren zur Umsetzung anderweitiger Antriebskonzepte verwendet werden.

Eine weitere vorteilhafte Ausführungsform der Erfindung zeichnet sich durch mehrere, entlang der Bearbeitungsrichtung gezogene, zwischen den Pflanzreihen in den Boden eingreifende Bodenbearbeitungswerkzeuge aus. Durch solche Bodenbearbeitungswerkzeuge lässt sich die Bodenbearbeitung weiter verbessern. Im Zusammenspiel mit den Aggregatwerkzeugen kann eine flächendeckende Bodenbearbeitung der Nutzfläche erreicht werden. Insbesondere können derartige Bodenbearbeitungswerkzeuge bei der Behandlung von in Pflanzreihen angebauten Nutzpflanzen eine mechanische Bodenbearbeitung zwischen den Pflanzreihen, etwa zur Unkrautbekämpfung, ermöglichen. Die Bodenbearbeitungswerkzeuge können insbesondere als starre, schar- oder zinkenartige Werkzeuge an einem Werkzeugrahmen ausgebildet sein. Bevorzugterweise sind die Bodenbearbeitungswerkzeuge quer zu der Bearbeitungsrichtung voneinander beabstandet angeordnet, wobei der Abstand insbesondere auf den Abstand der Pflanzreihen angepasst sein kann.

Es wird vorgeschlagen, dass das Bodenbearbeitungsaggregat als eine in Bearbeitungsrichtung hinter den Bodenbearbeitungswerkzeugen angeordnete Montageeinheit ausgebildet ist. Es ergibt sich ein montagefreundlicher Aufbau, bei welchem das Bodenbearbeitungsaggregat auf einfache und zeitsparende Weise ausgetauscht werden kann, beispielsweise im Falle eines Defekts. Ferner eignet sich eine solche Ausgestaltung auch besonders im Hinblick auf das Nachrüsten von Bodenbearbeitungsaggregaten an bestehenden Bodenbearbeitungsgeräten.

Aus konstruktiver Sicht ist es bevorzugt, wenn das Bodenbearbeitungsaggregat ein Antriebsgehäuse aufweist, an welchem die Schwenkantriebe und der Werkzeugantrieb angeordnet sind. Ein solches Antriebsgehäuse kann eine zuverlässige Lagerung der Schwenkantriebe und des Werkzeugantriebs ermöglichen.

In diesem Zusammenhang hat es sich als konstruktiv vorteilhaft herausgestellt, wenn das Antriebsgehäuse im Wesentlichen rechteckig ausgebildet ist, wobei die Schwenkantriebe in zwei diagonal gegenüberliegenden Quadranten des Antriebsgehäuses angeordnet sind. Bei einer solchen Ausgestaltung sind sämtliche Antriebe auf bediener- und wartungsfreundliche Art und Weise leicht zugänglich.

Darüber hinaus hat es sich als konstruktiv vorteilhaft erwiesen, wenn der Werkzeugantrieb und ein Getriebe zur Übertragung von Antriebskräften auf die Aggregatwerkzeuge in den übrigen Quadranten des Antriebsgehäuses angeordnet sind.

Es wird ferner vorgeschlagen, dass die Aggregatwerkzeuge über eine Schnellkupplung auswechselbar an dem Bodenbearbeitungsaggregat angeordnet sind. Durch eine solche Ausgestaltung lassen sich die Aggregatwerkzeuge bedienerfreundlich mit geringem Montageaufwand austauschen.

Eine vorteilhafte Weiterbildung der Erfindung sieht vor, dass die Schnellkupplung eine Befestigungsschnittstelle zur drehfesten Befestigung der Aggregatwerkzeuge und eine optional verwendbare Antriebsschnittstelle zur Übertragung von Antriebskräften auf die Aggregatwerkzeuge umfasst. Eine solche Ausgestaltung ermöglicht es dem Bedienpersonal, sowohl angetriebene als auch nicht angetriebene Aggregatwerkzeuge auf montagefreundliche Art und Weise an dem Bodenbearbeitungsaggregat anzuordnen. Die Befestigungsschnittstelle erlaubt eine zuverlässige mechanische Befestigung der Aggregatwerkzeuge, ohne dass die Gefahr von unerwünschten Verdrehungen besteht. Die Antriebsschnittstelle ermöglicht die zuverlässige und verlustarme Übertragung von Antriebskräften, insbesondere von Drehmomenten, auf angetriebene Aggregatwerkzeuge.

In diesem Zusammenhang hat es sich als vorteilhaft herausgestellt, wenn die Befestigungsschnittstelle und die Antriebsschnittstelle koaxial zueinander angeordnet sind. Hierdurch kann eine zeitsparende Montage der Aggregatwerkzeuge ermöglicht werden. Zur Montage von angetriebenen Aggregatwerkzeugen lassen sich die Befestigungsschnittstelle und die Antriebsschnittstelle aufgrund der koaxialen oder konzentrischen Anordnung in einem einzigen Arbeitsschritt bedienen. Bevorzugterweise ist die Antriebsschnittstelle im Vergleich zu der Befestigungsschnittstelle innen angeordnet. Eine inverse Anordnung kann sich je nach Anwendungsfall jedoch ebenfalls als vorteilhaft erweisen.

Es wird weiter vorgeschlagen, dass die Schnellkupplung eine aggregatseitige Buchse und einen korrespondierend ausgebildeten, werkzeugseitigen Stecker umfasst. Eine solche Ausgestaltung hat sich als besonders bedienerfreundlich herausgestellt, insbesondere für ungeübtes Bedienpersonal. Fehlmontagen können bei einer solchen Ausgestaltung weitgehend vermieden werden. Überdies wird bei einer solchen Ausgestaltung eine zeitsparende Betätigung durch eine Steckverbindung der Elemente der Schnellkupplung ermöglicht.

In diesem Zusammenhang hat es sich als vorteilhaft erwiesen, wenn an der Buchse und dem Stecker miteinander in Wirkverbindung bringbare Formschlusselemente angeordnet sind. Über solche Formschlusselemente kann sowohl eine zuverlässige mechanische Befestigung der Aggregatwerkzeuge als auch eine verlustarme Kraftübertragung auf die Aggregatwerkzeuge sichergestellt werden. Ferner lässt sich eine solche Verbindung auch durch ungeübtes Montagepersonal auf einfache Art und Weise wieder lösen. Bevorzugterweise sind die an dem Stecker angeordneten Formschlusselemente korrespondierend zu den an der Buchse angeordneten Formschlusselementen ausgebildet. Bei den Formschlusselementen kann es sich insbesondere um Vorsprünge und Rücksprünge, Stifte und Nuten, Haken und Ausnehmungen, einen Mehrkant, wie beispielsweise einen Sechskant, oder geeignete anderweitige Ausgestaltungen, etwa nach Art von Schraubenkopfantrieben, handeln.

Darüber hinaus wird eine Kupplungshilfe zum einfachen Ankuppeln des Steckers an die Buchse vorgeschlagen. Eine solche Kupplungshilfe oder Einführhilfe erleichtert das Ankuppeln des Steckers an die Buchse, insbesondere für ungeübtes Montagepersonal. Die Kupplungshilfe kann insbesondere als Abschrägung, Fase oder Ausrundung an entsprechenden, insbesondere in Richtung des jeweiligen Kupplungspartners ausgerichteten Kanten des Steckers und/oder der Buchse ausgebildet sein. Besonders vorteilhaft kann eine Kupplungshilfe im Bereich der Befestigungsschnittstelle sein. Überdies kann durch eine Kupplungshilfe die Verletzungsgefahr für das Montagepersonal beim Einführen des Steckers in die Buchse reduziert werden.

Es wird als konstruktiv bevorzugt vorgeschlagen, dass die Buchse zwei Halbschalen aufweist, welche zum Fixieren des Steckers in der Buchse über Klemmelemente lösbar miteinander verbunden sind. Eine solche Ausgestaltung hat sich als vorteilhaft im Hinblick auf einen Schutz der Kupplungsstelle vor Umwelteinflüssen, insbesondere vor Staub und Feuchtigkeit, herausgestellt.

Eine weitere, konstruktiv vorteilhafte Ausgestaltung sieht vor, dass die Schnellkupplung an einem Schwenkausleger angeordnet ist. Eine solche Ausgestaltung ermöglicht einen zeitsparenden Austausch von an dem Schwenkausleger angeordneten Aggregatwerkzeugen. Ferner erweist sich die Schnellkupplung bei einer solchen Anordnung als gut zugänglich, was die Wartungsfreundlichkeit erhöhen kann.

Eine konstruktiv vorteilhafte Weiterbildung der Erfindung sieht vor, dass der Schwenkausleger rohrförmig ausgebildet ist. Durch eine solche Ausgestaltung kann die koaxiale Anordnung von Befestigungsschnittstelle und Antriebsstelle vereinfacht werden. Ferner können sich rohrförmige Schwenkausleger als besonders formstabil unter den bei der Bodenbearbeitung herrschenden, oftmals harschen Umgebungsbedingungen erweisen. Zudem können rohrförmige Schwenkausleger in ihrem Inneren angeordneten Bauteilen und Bauelementen Schutz vor Umgebungseinflüssen bieten. Des Weiteren erlaubt eine solche Ausgestaltung vergleichsweise geringe Bauteilgewichte der Schwenkausleger, wodurch die Schwenkbewegungen der Schwenkausleger einfacher und mit geringerem Kraftaufwand durchgeführt werden können.

Es wird weiter vorgeschlagen, dass eine Antriebswelle zum Antrieb der Aggregatwerkzeuge im Inneren des Schwenkauslegers angeordnet ist. Die Antriebswelle ist bei einer solchen Anordnung vor Verschmutzungen und Umwelteinflüssen, wie etwa Niederschlag oder Staub, geschützt. Die Ausfallsicherheit der Antriebswelle kann somit erhöht werden. Überdies kann sich eine solche Ausgestaltung auch als vorteilhaft im Hinblick auf eine reduzierte Verletzungsgefahr von Bedien- oder Montagepersonal erweisen, da die rotierende Antriebswelle aufgrund der Anordnung im Inneren des Schwenkauslegers nicht ohne Weiteres von außen zugänglich ist. Als besonders montagefreundlich hat sich in diesem Zusammenhang eine Ausgestaltung erwiesen, bei welcher die Antriebswelle mit einer Kupplungshilfe versehen ist.

Es hat sich des Weiteren als konstruktiv vorteilhaft herausgestellt, wenn die Bodenbearbeitungswerkzeuge und die Aggregatwerkzeuge an einem Werkzeugrahmen angeordnet sind, welcher über eine Parallelogramm-Aufhängung mit einem Geräterahmen gekoppelt ist. Eine solche Parallelogramm-Aufhängung erlaubt eine zuverlässige Parallelführung des Werkzeugrahmens, insbesondere auf unebenen Nutzflächen. Entsprechend kann eine zuverlässige Parallelführung der an dem Werkzeugrahmen angeordneten Bodenbearbeitungs- und Aggregatwerkzeuge erreicht werden.

Es hat sich als vorteilhaft erwiesen, wenn der Werkzeugrahmen über mehrere Tiefenführungsrollen gegenüber dem Boden abgestützt ist und die Tiefenführungsrollen zum Ausgleich von Bodenunebenheiten gegenüber dem Werkzeugrahmen verschwenkbar angeordnet sind, wobei zwei benachbarte Tiefenführungsrollen über einen Wipphebel mechanisch miteinander gekoppelt und gegenüber dem Werkzeugrahmen pendelnd angeordnet sind. Eine solche Ausgestaltung ermöglicht dem Bodenbearbeitungsgerät eine stabile Fahrlage, bei welcher ein Verlust des Bodenkontakts durch die Tiefenführungsrollen zuverlässig vermieden werden kann. Es resultiert eine gleichmäßigere Bodenbearbeitung.

Eine vorteilhafte Weiterbildung der Erfindung sieht vor, dass die Tiefenführungsrollen zur Kompensation von Bodenunebenheiten um eine sich quer zur Bearbeitungsrichtung erstreckende Schwenkachse schwenkbar an dem Werkzeugrahmen befestigt sind. Eine solche Ausgestaltung ermöglicht den Ausgleich von Bodenunebenheiten. Insbesondere können Bodenniveauunterschiede quer zu der Bearbeitungsrichtung ausgeglichen werden.

Es hat sich als vorteilhaft herausgestellt, wenn der Wipphebel als zweiseitiger Hebel ausgebildet ist, welcher um eine sich quer zu der Schwenkachse erstreckende Wippachse pendelnd gelagert ist. Es ergibt sich eine kinematisch vorteilhafte Pendellagerung, welche einen Ausgleich der Niveaus der beiden gekoppelten Tiefenführungsrollen erlaubt. Besonders bevorzugt ist in diesem Zusammenhang, wenn der Wipphebel nach Art eines Kipphebels ausgebildet ist, dessen beiden Seiten im Wesentlichen gleichlang ausgeführt sind. Ferner kann es vorteilhaft sein, wenn die Wippachse durch den Mittelpunkt des Wipphebels verläuft. Alternativ kann die Wippachse sich auch im Wesentlichen in Bearbeitungsrichtung erstrecken. Des Weiteren hat es sich als vorteilhaft erwiesen, wenn die Wippachse in der vertikalen Bearbeitungsebene liegt, welche sich senkrecht durch die Bearbeitungsrichtung erstreckt. Für gewisse Anwendungsfälle kann es auch bevorzugt sein, wenn zwischen der Wippachse und der Bearbeitungsrichtung ein Winkel, vorzugsweise ein spitzer Winkel, eingeschlossen ist. Überdies sind auch andere Anordnungen der Wippachse relativ zu der Bearbeitungsrichtung denkbar.

In diesem Zusammenhang wird ferner vorgeschlagen, dass sich der Wipphebel in einer Neutralstellung im Wesentlichen in Richtung der Schwenkachse, insbesondere parallel zur Schwenkachse, erstreckt. Eine solche Anordnung erlaubt einen gleichmäßigen Ausgleich von unebenen Bodenverhältnissen in beide Pendelrichtungen ohne Vorzugsrichtung. Insbesondere kann sich die Schwenkachse im Wesentlichen parallel zu einer Bodenebene erstrecken. Es ist jedoch auch denkbar, dass sich der Wipphebel in der Neutralstellung schräg zur Schwenkachse ausgerichtet ist.

In einer vorteilhaften Ausgestaltung sind die Tiefenführungsrollen jeweils an einem um die Schwenkachse schwenkbaren Längslenker befestigt. Es ergibt sich eine zuverlässige Aufhängung der Tiefenführungsrollen, welche sowohl eine effektive Führung der Tiefenführungsrollen in Längsrichtung als auch eine kinematisch einfache Schwenkbewegung der Tiefenführungsrollen um die Schwenkachse ermöglicht. Vorteilhafterweise können die Längslenker sich zwischen der Schwenkachse und der Nabe der jeweiligen Tiefenführungsrolle erstrecken.

In diesem Zusammenhang wird vorgeschlagen, dass der Längslenker eine Buchse aufweist, welche um ein sich in Richtung der Schwenkachse erstreckendes Achselement drehbar gelagert ist. Die Buchse ermöglicht eine kinematisch vorteilhafte, torsionsfreie Schwenkbewegung des Längslenkers um das Achselement. Bevorzugt ist, wenn das Achselement profilartig, insbesondere als Hohlprofil, ausgebildet ist.

Es hat sich ferner als vorteilhaft erwiesen, wenn der Wipphebel mit den Längslenkern gekoppelt ist. Über die Kopplung mit den Längslenkern kann die Pendelbewegung des Wipphebels auf einfache Art und Weise auf die Längslenker übertragen werden. Es resultiert ein kinematisch überschaubarer, wartungsfreundlicher Aufbau.

In diesem Zusammenhang wird vorgeschlagen, dass der Wipphebel zwei sich radial zur Wippachse erstreckende Führungsausnehmungen zur Führung je-weils eines, insbesondere korrespondierenden, Führungsvorsprungs der Längslenker aufweist. Die Führungsvorsprünge können durch die Führungsausnehmungen zumindest teilweise formschlüssig aufgenommen sein, wodurch sich eine sichere Führung ergeben kann. Eine solche Ausgestaltung ermöglicht dem Wipphebel gleichmäßige und verkantungsfreie Pendelbewegungen. Bevorzugterweise können die Führungsausnehmungen als Rücksprünge, bspw. als taschenartige Rücksprünge, in dem Wipphebel ausgebildet sein. Über die Gestaltung der Führungsausnehmungen und/oder der Führungsvorsprünge lässt sich der Bewegungsspielraum des Wipphebels, und damit auch das Ausmaß der Schwenkbewegungen der beiden damit gekoppelten Längslenker, begrenzen.

Aus konstruktiver Sicht ist es bevorzugt, wenn die Führungsvorsprünge nasenartig, insbesondere nasenartig mit rechteckigem Querschnitt, ausgebildet sind. Eine solche Ausgestaltung der Führungsvorsprünge als nasenartige Projektionen erlaubt eine robuste und fehlerunanfällige Führung der Längslenker. Insbesondere können sich die Führungsvorsprünge nasenartig in der Ebene eines flachen Längslenkers erstrecken.

Eine weitere konstruktiv vorteilhafte Ausführungsform zeichnet sich dadurch aus, dass die Führungsausnehmungen als im Wesentlichen rechteckige Aussparungen ausgebildet sind, welche sich in der Neutralstellung entlang der Schwenkachse erstrecken. In Kombination mit einem rechteckigen Führungsvorsprung ergibt sich eine effektive Führung der Längslenker bei den Pendelbewegungen. Es hat sich als besonders vorteilhaft erwiesen, wenn sich in der Neutralstellung die rechteckigen Aussparungen mit ihren längeren Kanten entlang der Schwenkachse erstrecken.

Es wird ferner vorgeschlagen, dass die Längslenker zur Einstellung einer Spurweite der Tiefenführungsrollen entlang der Schwenkachse relativ zu dem Achselement bewegbar sind. Eine solche Ausgestaltung ermöglicht eine bedienerfreundliche, zeitsparende Einstellung der Spurweite der Tiefenführungsrollen. In einer bevorzugten Ausgestaltung können die Längslenker entlang der Schwenkachse auf einfache Art und Weise verschiebbar angeordnet sein. Insbesondere können zwei benachbarte Tiefenführungsrollen zur Erhöhung der Spurweite voneinander weg und/oder zur Verringerung der Spurweite aufeinander zu bewegbar sein. Es ist von Vorteil, dass sich die Spurweite auf diese Weise auf die Breite der jeweiligen Pflanzreihe R und/oder den Abstand zwischen den Pflanzreihen R anpassen lässt.

Des Weiteren ist es bevorzugt, wenn die mit den Führungsvorsprüngen zusammenwirkenden Führungsausnehmungen als Führungen bei der Einstellung der Spurweite dienen. Es ergibt sich eine bedienerfreundlich gute Führung der Längslenker bei der Einstellung der Spurweite. Ferner resultiert aus einer solchen Ausgestaltung eine vorteilhafte Doppelfunktion der Führungsausnehmungen.

Ferner hat es sich als vorteilhaft erweisen, wenn die Buchse mit einem Arretierelement entlang der Schwenkachse axial unbeweglich und zugleich um die Schwenkachse drehbar an dem Achselement arretierbar ist. Hierdurch kann einerseits sichergestellt werden, dass sich die Spurweite nicht ungewollt ändert und andererseits dennoch ein effektiver Ausgleich von Bodenunebenheiten über die Schwenkbewegungen der Längslenker erreicht werden kann. Das Arretierelement kann bspw. als Splint oder als Federstecker ausgebildet sein.

In diesem Zusammenhang ist es bevorzugt, dass die Buchse zur Einstellung der Spurweite in verschiedenen Arretierstellungen an dem Achselement arretierbar ist. Es ergibt sich eine bedienerfreundliche Ausgestaltung, bei welcher verschiedene Spurweiten auf einfache Art und Weise eingestellt werden können. Die einzelnen Spurweiten, welche durch das Lochmuster vorgegeben sind, können wiederholgenau eingestellt werden. Zudem kann über die Arretierung sichergestellt werden, dass die eingestellten Spurweiten sich nicht während der Bodenbearbeitung verstellen, bspw. infolge von Erschütterungen oder Vibrationen.

Konstruktiv vorteilhaft ist es in diesem Zusammenhang, wenn die Arretierstellungen durch ein an dem Achselement angeordnetes Lochmuster vorgegeben sind. Ein solches Lochmuster erlaubt eine bedienerfreundliche, fehlerunanfällige Einstellung unterschiedlicher Spurweiten. Zudem hat sich eine solche Ausgestaltung als vergleichsweise unempfindlich gegenüber Umwelteinflüssen, wie Staub und Verschmutzungen, erwiesen, so dass selbst unter widrigen Umgebungsbedingungen eine wiederholgenaue, exakte Einstellung der Spurweiten ermöglicht werden kann. Es kann vorteilhaft sein, wenn der Durchmesser der Bohrungen des Lochmusters auf den Durchmesser des stiftartigen Arretierelements angepasst ist.

Ferner wird vorgeschlagen, dass die Buchse einen mit dem Arretierelement zusammenwirkenden Schwenkanschlag zur Begrenzung der Schwenkbewegungen des Längslenkers aufweist. Übermäßige Schwenkbewegungen des Längslenkers lassen sich durch eine solche Ausgestaltung vermeiden. Es ergibt sich zugleich eine vorteilhafte Doppelfunktion für das Arretierelement, welches nicht nur die eingestellte Spurweite fixiert, sondern auch den Schwenkwinkel der Längslenker. Konstruktiv hat es sich in diesem Zusammenhang als vorteilhaft herausgestellt, wenn der Schwenkanschlag am Ende einer nut- oder taschenartigen Ausnehmung in der Buchse ausgebildet ist. In dieser Ausnehmung kann das Arretierelement geführt sein.

Eine konstruktiv vorteilhafte Ausführungsform sieht vor, dass die Längslenker als mehrfach abgewinkelte Elemente ausgebildet sind. Insbesondere können die Längslenker als Blechformteile ausgebildet sein.

Eine weitere vorteilhafte Weiterbildung der Erfindung sieht vor, dass das Achselement an einem Tragarm angeordnet ist. Ein solcher Tragarm kann insbesondere eine tragfähige Verbindung zu dem Werkzeugrahmen sicherstellen. Bevorzugt ist eine Ausgestaltung, bei welcher der Tragarm als einseitig am Werkzeugrahmen angelenkter Träger ausgebildet ist. Das Achselement kann vorzugsweise durch eine Bohrung am Tragarm gesteckt sein, so dass beidseitig des Tragarms ein Segment des Achselements angeordnet ist, welches mit jeweils einem Längslenker gekoppelt sein kann.

Konstruktiv bevorzugt ist es in diesem Zusammenhang, wenn der Tragarm als Doppelprofil ausgebildet ist. Es ergibt sich eine gleichsam stabile wie gewichtssparende Ausgestaltung.

Es wird ferner vorgeschlagen, dass der Wipphebel in der Neutralstellung parallel zu dem Achselement angeordnet ist. Eine solche Ausgestaltung erlaubt kinematisch einfache, symmetrische Pendelbewegungen. Insbesondere kann der Wipphebel über ein Drehlager an dem Achselement angeordnet sein.

Des Weiteren hat es sich als vorteilhaft herausgestellt, wenn die Tiefenführungsrollen in Bearbeitungsrichtung vor den Bodenbearbeitungswerkzeugen angeordnet sind. Eine solche Anordnung erlaubt eine stabile Führung des Werkzeugrahmens. Ferner kann eine vergleichsweise kompakte Bauweise des Bodenbearbeitungsgeräts ermöglicht werden. Alternativ können die Tiefenführungsrollen jedoch auch hinter den Bodenbearbeitungswerkzeugen angeordnet sein, wenn dies im jeweiligen Anwendungsfall günstig ist.

In einer weiteren, konstruktiv vorteilhaften Weiterbildung der Erfindung wird vorgeschlagen, dass jeweils zwei Tiefenführungsrollen über eine gemeinsame Radaufhängung an dem Werkzeugrahmen angeordnet sind. Benachbarte, pendelnd angeordnete Tiefenführungsrollen können bei einer solchen Ausgestaltung auf vorteilhafte Weise gemeinsam mit dem Werkzeugrahmen verbunden sein. Alternativ können auch mehr oder weniger Tiefenführungsrollen über eine gemeinsame Radaufhängung an dem Werkzeugrahmen angeordnet sein.

Darüber hinaus hat es sich als konstruktiv vorteilhaft erwiesen, wenn sich die Radaufhängung schräg zur Vertikalen erstreckt. Eine solche Anordnung ermöglicht eine günstige Krafteinleitung in den Werkzeugrahmen. Insbesondere kann sich der Tragarm schräg zur Vertikalen erstrecken. Bevorzugt ist eine Anordnung des Tragarms in einem Winkel zwischen 0 und 60 Grad zur Vertikalen, besonders bevorzugt zwischen 10 und 50 Grad. Es hat sich konstruktiv als besonders günstig erwiesen, wenn die Tiefenführungsrollen zumindest teilweise unterhalb eines Geräterahmens 8 angeordnet sind.

Es wird ferner vorgeschlagen, dass die Radaufhängung einen im Wesentlichen symmetrischen Aufbau in Bezug auf eine sich entlang der Bearbeitungsrichtung erstreckende Symmetrieebene aufweist. Eine derartige Ausgestaltung erlaubt gleichmäßige Pendelbewegungen und somit eine effektive Kompensation von Bodenunebenheiten. Ferner kann sich ein solcher konstruktiver Aufbau als besonders wartungsfreundlich erweisen.

In einer weiteren vorteilhaften Weiterbildung der Erfindung weist das Bodenbearbeitungsgerät mehrere, quer zur Bearbeitungsrichtung nebeneinander angeordnete Radaufhängungen auf. Hierdurch lässt sich die Abstützung und Führung des Werkzeugrahmens weiter verbessern. Insbesondere kann die Anzahl der Radaufhängungen, und damit die Anzahl der Tiefenführungsräder, auf die Anzahl an nebeneinander angeordneten Bodenbearbeitungswerkzeugen angepasst sein.

Es hat sich ferner als vorteilhaft erwiesen, wenn das Bodenbearbeitungsaggregat entgegen der Kraft einer sich spannenden Feder gegenüber dem Werkzeugrahmen bewegbar angeordnet ist. Im Falle eines Kontakts des Bodenbearbeitungsaggregats mit einem Hindernis erlaubt eine solche Anordnung einerseits ein Ausweichen des Bodenbearbeitungsaggregats im Sinne einer Überlastsicherung, wodurch sich die Gefahr von Beschädigungen und Defekte des Bodenbearbeitungsaggregats zuverlässig reduzieren lässt. Andererseits kann das Bodenbearbeitungsaggregat nach Wegfall des Hindernisses durch die Kraft der sich spannenden Feder wieder in die vorbestimmte Position zurückbewegt werden, wodurch sich Fehlpositionierungen vermeiden lassen.

In einer vorteilhaften Weiterbildung der Erfindung ist das Bodenbearbeitungsaggregat um eine Schwenkachse entgegen der Kraft der sich spannenden Feder schwenkbar angeordnet. Eine solche Ausgestaltung ermöglicht ein Verschwenken des Bodenbearbeitungsaggregats bei Kontakt mit einem Hindernis zur Vermeidung von Beschädigungen. Sie zeichnet sich durch einen kinematisch einfachen Aufbau aus und erlaubt eine zuverlässige Vermeidung von Beschädigungen des Bodenbearbeitungsaggregats. Als besonders vorteilhaft hat sich eine Ausgestaltung erwiesen, bei welcher die Schwenkachse in einem möglichst großen Abstand oberhalb der Nutzfläche angeordnet ist. Hierdurch kann die zur Verfügung stehende lichte Durchgangshöhe unterhalb des Bodenbearbeitungsaggregats maximiert werden, so dass etwa auch größeren Hindernissen auf der Nutzfläche ausgewichen werden kann.

In diesem Zusammenhang hat es sich als vorteilhaft herausgestellt, wenn das Bodenbearbeitungsaggregat entgegen der Bearbeitungsrichtung schwenkbar angeordnet ist. Hierdurch lässt sich auf einfache Art und Weise sicherstellen, dass das Bodenbearbeitungsaggregat insbesondere unbeweglich auf der Nutzfläche befindlichen Hindernissen, wie Steine oder Felsen, während der Bodenbearbeitung ausweichen kann. Besonders vorteilhaft ist es in diesem Zusammenhang, wenn sich die Schwenkachse im Wesentlichen quer zu der Bearbeitungsrichtung erstreckt, so dass Kollisionen benachbarter Bodenbearbeitungsaggregate beim Verschwenken vermieden werden können. Auch bei höheren Bodenbearbeitungsgeschwindigkeiten lassen sich Beschädigungen und Defekte des Bodenbearbeitungsaggregats zuverlässig reduzieren.

Es hat sich als vorteilhaft herausgestellt, wenn die Feder eine entgegen der Bearbeitungsrichtung wirkende Rückstellkraft auf das Bodenbearbeitungsaggregat ausübt. Durch eine solche Ausgestaltung kann sichergestellt werden, dass das Bodenbearbeitungsaggregat nach dem Ausweichen eines Hindernisses schnell und zuverlässig wieder in die korrekte, vordefinierte Position bewegt wird, ohne dass es hierzu eines Eingriffs des Bedienpersonals bedarf. Die Feder kann beispielsweise als Spiralfeder, Zugfeder, Schenkelfeder oder Blattfeder ausgebildet sein, je nachdem, welche Federform sich im konkreten Anwendungsfall für die Aufbringung einer hinreichenden Rückstellkraft auf das Bodenbearbeitungsaggregat als geeignet herausstellt. Ferner kann das Bodenbearbeitungsaggregat aufgrund der entgegen der Bearbeitungsrichtung wirkenden Rückstellkraft auch unter während der Bodenbearbeitung auftretenden Erschütterungen oder Vibrationen in der korrekten Position gehalten werden, was von Vorteil für eine qualitativ hochwertige Bodenbearbeitung ist.

Eine konstruktiv bevorzugte Ausgestaltung sieht vor, dass sich die Feder zwischen dem Werkzeugrahmen und einer mit dem Bodenbearbeitungsaggregat schwenkfest gekoppelten Arbeitstiefeneinstellung erstreckt.

Gemäß einer vorteilhaften Weiterbildung der Erfindung erstreckt sich die Feder im Wesentlichen horizontal zwischen dem Werkzeugrahmen und der Arbeitstiefeneinstellung. Neben einer vereinfachten Zugänglichkeit der Feder zu Reparatur- oder Wartungszwecken zeichnet sich eine solche Ausgestaltung insbesondere dadurch aus, dass die Rückstellkraft besonders zuverlässig und gleichmäßig aufgebracht werden kann. Verkantungen, Verdrehungen oder anderweitige Fehlbelastungen der Feder lassen sich weitgehend vermeiden.

Ferner hat es sich als konstruktiv vorteilhaft erwiesen, wenn die mit dem Bodenbearbeitungsaggregat schwenkfest gekoppelte Arbeitstiefeneinstellung über ein Drehlager um die Schwenkachse schwenkbar an dem Werkzeugrahmen gelagert ist. Das Drehlager ermöglicht eine zuverlässige Lagerung des Bodenbearbeitungsaggregat bei den Schwenkbewegungen.

Eine bevorzugte Ausführungsform sieht in diesem Zusammenhang ferner vor, dass das Drehlager Kippbewegungen des Bodenbearbeitungsaggregats längs und/oder quer und/oder schräg zu der Schwenkachse erlaubt. Hierdurch ist eine weitere Ausweichmöglichkeit des Bodenbearbeitungsaggregats gegenüber Hindernissen wie Steinen o. Ä. geschaffen. Das Drehlager erlaubt ein kippendes Ausweichen des Bodenbearbeitungsaggregats um einen kardanischen Winkel. Hindernisse oder Störeinflüsse, welche zu quer oder schräg zu der Bearbeitungsrichtung wirkenden Kräften führen, lassen sich durch das Drehlager kompensieren, ohne dass es zu Beschädigungen des Bodenbearbeitungsaggregats kommt.

Es wird in diesem Zusammenhang vorgeschlagen, dass das Drehlager eine Buchse mit einem diese elastisch umgreifenden Lagerelement aufweist. Eine solche Ausgestaltung ermöglicht ein gewisses Ausweichen des Bodenbearbeitungsaggregats in verschiedenen Raumrichtungen, insbesondere auch abweichend von der Schwenkrichtung. Hierdurch lassen sich kleinere Störeinflüsse, wie etwa Querkräfte, einfach und zuverlässig kompensieren. Ferner können auch Vibrationen oder Schwingungen über das elastische Lagerelement gedämpft werden. Als elastisches Material für das Lagerelement kommen insbesondere gummi- oder harzartige Werkstoffe in Frage. Die Buchse ist in der Regel aus einem metallischen Werkstoff gefertigt und beispielsweise durch Vulkanisieren mit dem Lagerelement verbunden.

Darüber hinaus werden mindestens zwei insbesondere an dem Werkzeugrahmen angeordnete Führungselemente zur Führung der Bewegungen des Bodenbearbeitungsaggregats vorgeschlagen. Solche Führungselemente erlauben die exakte Positionierung, insbesondere die Zentrierung des gegenüber dem Werkzeugrahmen bewegbaren Bodenbearbeitungsaggregats, auch unter in verschiedenen Raumrichtungen angreifenden Störkräften. Insbesondere können solche Führungselemente auf vorteilhafte Art und Weise zur Vermeidung von der Bodenbearbeitung negativ beeinflussenden Fehlpositionierungen beitragen.

Ferner wird vorgeschlagen, dass die Führungselemente zum Zusammenwirken mit an dem Antriebsgehäuse des Bodenbearbeitungsaggregats angeordneten Gegenführungselementen ausgebildet sind. Eine solche Ausgestaltung erlaubt eine weiter verbesserte Positionierung des Bodenbearbeitungsaggregats relativ zu dem Werkzeugrahmen.

Es kann darüber hinaus von konstruktivem Vorteil sein, wenn sich die Führungselemente zur Führung der Bewegungen des Bodenbearbeitungsaggregats trichterförmig in Bearbeitungsrichtung erstrecken. Insbesondere können sich die Führungselemente vorteilhafterweise entgegen der Bearbeitungsrichtung trichterförmig verjüngen, so dass das Bodenbearbeitungsaggregat unter der Kraftwirkung der Feder in die korrekte Position bewegt werden kann. Es wird eine Zentrierung des Bodenbearbeitungsaggregats ermöglicht.

Als vorteilhaft hat sich in diesem Zusammenhang ferner herausgestellt, wenn die Feder als Doppelfeder ausgebildet ist. Eine Doppelfeder kann eine gleichmäßige, auch symmetrische Aufbringung der Rückstellkraft auf das Bodenbearbeitungsaggregat ermöglichen. Ferner kann sich eine solche Ausgestaltung auch als vorteilhaft im Hinblick auf die Ausfallsicherheit sein, da eine Doppelfeder eine gewisse Redundanz bieten kann.

Eine vorteilhafte Weiterbildung der Erfindung sieht vor, dass die Bodenbearbeitungswerkzeuge und die Aggregatwerkzeuge über gesonderte Arbeitstiefeneinstellungen unabhängig voneinander einstellbar sind. Eine solche Ausgestaltung erlaubt dem Bedienpersonal eine gezielte, an die jeweiligen Bodenniveaus angepasste Einstellung unterschiedlicher Arbeitstiefen für die Bodenbearbeitungswerkzeuge und die Aggregatwerkzeuge. Hierdurch kann eine zuverlässige Bodenbearbeitung gewährleistet werden, bei welcher die Nutzpflanzen zudem vor ungewollten Beschädigungen weitgehend geschützt werden können.

In einer weiteren vorteilhaften Weiterbildung der Erfindung wird vorgeschlagen, dass die Bodenbearbeitungswerkzeuge und die Aggregatwerkzeuge über die Arbeitstiefeneinstellungen zur Einstellung der Arbeitstiefe gegenüber dem Werkzeugrahmen bewegbar sind. Eine solche Ausgestaltung ermöglicht eine zuverlässige und gleichsam wiederholgenaue Arbeitstiefeneinstellung. Der Werkzeugrahmen kann als eindeutige Referenz für die Arbeitstiefeneinstellung dienen. Zudem kann der Werkzeugrahmen zu einem robusten, verschleißarmen Gesamtaufbau des Bodenbearbeitungsgeräts beitragen.

Es hat sich ferner als vorteilhaft herausgestellt, wenn das Bodenbearbeitungsaggregat zur Einstellung der Arbeitstiefe der Aggregatwerkzeuge über die Arbeitstiefeneinstellung höhenverstellbar ist. Bei einem solchen Aufbau lassen sich die Arbeitstiefen der an einem Bodenbearbeitungsaggregat angeordneten Aggregatwerkzeuge auf einfache und bedienerfreundliche Art und Weise einstellen. Ferner kann durch eine solche Anordnung auf einfache Art und Weise sichergestellt werden, dass die Arbeitstiefen der an einem Bodenbearbeitungsaggregat angeordneten Aggregatwerkzeuge gleichmäßig einstellbar sind. Als besonders vorteilhaft hat sich in diesem Zusammenhang ein Aufbau erwiesen, bei welchem das Bodenbearbeitungsaggregat zur Einstellung der Arbeitstiefe der Aggregatwerkzeuge über die Arbeitstiefeneinstellung in vertikaler Richtung bewegbar ist. In einer alternativen Ausgestaltung kann es für gewisse Anwendungsfälle von Vorteil sein, wenn die zwei Aggregatwerkzeuge unabhängig voneinander über die Arbeitstiefeneinstellung höhenverstellbar sind.

In diesem Zusammenhang ist es bevorzugt, wenn das Bodenbearbeitungsaggregat schwenkfest mit der Arbeitstiefeneinstellung gekoppelt ist. Es ergibt sich ein gleichermaßen verschleiß- und wartungsarmer Aufbau. Ferner kann durch eine schwenkfeste Kopplung des Bodenbearbeitungsaggregats mit der Arbeitstiefeneinstellung eine wiederholgenaue, bedienerfreundliche Arbeitstiefeneinstellung ermöglicht werden. Zudem lassen sich bei einer solchen Anordnung die Stellkräfte zur Einstellung der Arbeitstiefe verlustarm übertragen.

Eine weitere vorteilhafte Ausgestaltung sieht vor, dass die Arbeitstiefeneinstellungen jeweils einen Stellantrieb zur Einstellung der Arbeitstiefe aufweisen. Ein Stellantrieb ermöglicht eine wiederholgenaue, bedienerfreundliche Einstellung der Arbeitstiefe. Ferner kann sich ein Stellantrieb als vorteilhaft im Hinblick auf eine zeitsparende Einstellung der Arbeitstiefe herausstellen.

In diesem Zusammenhang hat es sich als vorteilhaft erwiesen, wenn die Stellantriebe als mechanische, elektrische oder hydraulische Stellantriebe ausgebildet sind. Solche Stellantriebe ermöglichen eine besonders zeitsparende, gleichermaßen exakte wie bedienerfreundliche Einstellung der Arbeitstiefe. Insbesondere können solche Stellantriebe eine Fernbetätigung der Arbeitstiefeneinstellung ermöglichen. Elektrische Stellantriebe können vorteilhafterweise mit der Bordelektronik des Bodenbearbeitungsgeräts und/oder der Zugmaschine gekoppelt sein. Entsprechend können hydraulische Stellantriebe mit der Bordhydraulik des Bodenbearbeitungsgeräts und/oder der Zugmaschine gekoppelt sein. Alternativ können sich auch andere Antriebskonzepte als vorteilhaft für die Einstellung der Arbeitstiefe erweisen.

Es hat sich als vorteilhaft herausgestellt, wenn die Stellantriebe als Spindelantriebe, insbesondere als sich im Wesentlichen vertikal erstreckende Spindeltriebe, ausgebildet sind. Über solche Spindelantriebe lässt sich die Arbeitstiefeneinstellung besonders präzise bewerkstelligen. Insbesondere kann die Arbeitstiefeneinstellung stufenlos ausgeführt sein, wodurch sich die Arbeitstiefe der Bodenbearbeitungswerkzeuge und/oder der Aggregatwerkzeuge besonders genau auf die Anforderungen der jeweiligen Nutzpflanzen oder die herrschenden Umgebungsbedingungen anpassen lässt. Alternativ kann jedoch auch eine stufenweise Einstellung der Arbeitstiefe vorteilhaft sein, etwa, weil sich hierdurch leichter einheitliche Arbeitstiefen über die unterschiedlichen Bodenbearbeitungswerkzeuge und/oder Aggregatwerkzeuge einstellen lassen.

Des Weiteren wird vorgeschlagen, dass die Stellantriebe der Arbeitstiefeneinstellung der Aggregatwerkzeuge quer zur Bearbeitungsrichtung nebeneinander angeordnet sind und/oder dass die Stellantriebe der Arbeitstiefeneinstellungen der Bodenbearbeitungswerkzeuge quer zur Bearbeitungsrichtung nebeneinander angeordnet sind. Ein solcher Aufbau hat sich als vorteilhaft im Hinblick auf eine einfache Zugänglichkeit der Arbeitstiefeneinstellungen herausgestellt. Ferner kann durch eine solche Anordnung eine gleichmäßige Arbeitstiefeneinstellung unterstützt werden. Überdies kann eine solche Anordnung zu einem symmetrischen Aufbau beitragen, welcher für eine ausgeglichene Lastverteilung des Bodenbearbeitungsgeräts sorgen kann.

Es kann ferner von Vorteil sein, wenn die Stellantriebe der Arbeitstiefeneinstellung der Aggregatwerkzeuge in Bearbeitungsrichtung versetzt zu den Stellantrieben der Bodenbearbeitungswerkzeuge angeordnet sind. Eine solche Anordnung hat sich als besonders wartungs- oder reparaturfreundlich herausgestellt, da die Stellantriebe für das Wartungspersonal leicht zugänglich angeordnet sind. Alternativ können die Stellantriebe der Arbeitstiefeneinstellung der Aggregatwerkzeuge in Bearbeitungsrichtung parallel oder neben den Stellantrieben der Bodenbearbeitungswerkzeuge angeordnet sein, wodurch sich ein platzsparender Aufbau ergeben kann.

Im Hinblick auf eine bedienerfreundliche Arbeitstiefeneinstellung hat es sich darüber hinaus als vorteilhaft herausgestellt, wenn die Stellantriebe über je-weils ein Handbedienelement bedienbar sind. Eine solche Ausgestaltung ermöglicht eine einfache Einstellung der Arbeitstiefe auch für ungeübtes Bedienpersonal. Ferner kann sich ein solcher Aufbau als besonders zuverlässig und robust herausstellen, da sich eine solche mechanische Arbeitstiefeneinstellung unabhängig von eventuellen Störungen der Strom- oder Hydraulikversorgung betätigen lässt. In diesem Zusammenhang kann es auch bevorzugt sein, ein Handbedienelement zusätzlich zu einem elektrischen oder hydraulischen Stellantrieb vorzusehen, um im Falle eines Defektes der jeweiligen elektrischen oder hydraulischen Antriebe eine Handbedienung zu ermöglichen. Hierdurch lässt sich die Ausfallsicherheit des Bodenbearbeitungsgeräts erhöhen.

Es wird ferner vorgeschlagen, dass die Handbedienelemente unterschiedliche, in vertikaler Richtung voneinander beabstandete Bedienebenen auf-weisen. Eine solche Ausgestaltung ermöglicht eine zeitsparende gleichzeitige Bedienung von zwei Handbedienelementen. Insbesondere lässt sich durch zwei in vertikaler Richtung voneinander beabstandete Bedienebenen eine gegenseitige Behinderung der Handbedienelemente, insbesondere eine Kollision der Handbedienelemente, zuverlässig vermeiden.

In Bezug auf die Handbedienelemente wird vorgeschlagen, dass diese als Kurbeln ausgebildet sind. Über solche Kurbeln lassen sich die Stellantriebe auf bedienerfreundliche Art und Weise mit geringer Stellkraft bedienen. Alternativ können die Handbedienelemente auch als Hebel oder ähnliche Bauteile ausgebildet sein. Um eine unerwünschte Verstellung der Handbedienelemente, etwa aufgrund von Erschütterungen oder Schwingungen während der Bodenbearbeitung zu vermeiden, können geeignete Fixierelemente zur Fixierung oder Feststellung der Handbedienelemente vorgesehen sein.

Eine weitere vorteilhafte Ausgestaltung der Erfindung sieht vor, dass die Stellantriebe mit einer Arbeitstiefensteuerung zur Steuerung der Arbeitstiefe gekoppelt sind. Hierdurch kann die Arbeitstiefe der Bodenbearbeitungswerkzeuge und/oder der Aggregatwerkzeuge besonders einfach und zeitsparend eingestellt werden. Insbesondere kann die Arbeitstiefensteuerung mit einer zentralen Steuerung des Bodenbearbeitungsgeräts und/oder der Zugmaschine gekoppelt sein. Die Steuerung der Arbeitstiefe kann beispielsweise aufgrund von vordefinierten Kartierungen der Nutzfläche oder auf Basis von Sensordaten erfolgen.

Es wird weiter vorgeschlagen, dass die Arbeitstiefeneinstellungen jeweils eine Arbeitstiefenanzeige zur Anzeige der Arbeitstiefe aufweisen. Eine solche Ausgestaltung ermöglicht dem Bedienpersonal ein einfaches Erfassen der eingestellten Arbeitstiefe. Hierdurch ist eine einfache Kontrollmöglichkeit der eingestellten Arbeitstiefe gegeben. Zudem lässt sich bei einer solchen Ausgestaltung die Arbeitstiefe besonders genau einstellen. Vorteilhaft ist es in diesem Zusammenhang, wenn die Anzeige der Arbeitstiefe mit der Bordelektronik des Bodenbearbeitungsgeräts und/oder der Zugmaschine verknüpft ist. Es kann im Hinblick auf einen einfachen Aufbau der Maschine auch vorteilhaft sein, wenn nur ausgewählte Arbeitstiefeneinstellungen über eine Arbeitstiefenanzeige verfügen. Zudem kann die Arbeitstiefeneinstellung auch zur bedarfsweisen Anzeige der Arbeitstiefe unterschiedlicher Bodenbearbeitungswerkzeuge und/oder Aggregatwerkzeuge ausgestaltet sein.

In diesem Zusammenhang ist es bevorzugt, wenn die Arbeitstiefenanzeigen mit einer Arbeitstiefenerfassung zur Erfassung der Arbeitstiefe gekoppelt sind. Hierdurch kann eine zuverlässige, möglichst genaue Erfassung der Arbeitstiefe sichergestellt werden. Vorteilhafterweise kann die Arbeitstiefe sensortechnisch erfasst werden. In diesem Zusammenhang kann es auch von Vorteil sein, wenn die Daten der Arbeitstiefenerfassung in einer Arbeitstiefenregelung verwendet werden. Über eine solche Arbeitstiefenregelung lässt sich die Arbeitstiefe noch zuverlässiger und angepasst an die jeweiligen Umgebungsbedingungen einstellen.

Als konstruktiv bevorzugt hat sich eine Ausgestaltung herausgestellt, bei welcher die Arbeitstiefeneinstellung des Bodenbearbeitungswerkzeugs zumindest teilweise von einer Aufnahme für die schwenkbare Anordnung der Arbeitstiefeneinstellung der Aggregatwerkzeuge umgriffen ist. Die Aufnahme ermöglicht ein zuverlässiges Aufnehmen der Arbeitstiefeneinstellung der Aggregatwerkzeuge, insbesondere deren Stellelemente. Ferner lassen sich hierdurch die jeweiligen Stellantriebe der Arbeitstiefeneinstellung des Bodenbearbeitungswerkzeugs und der Aggregatwerkzeuge auf einfache Art und Weise in Bearbeitungsrichtung hintereinander anordnen.

Eine konstruktiv bevorzugte Ausführungsform sieht in diesem Zusammenhang vor, dass die Aufnahme im Wesentlichen U-förmig ist.

Des Weiteren hat es sich als vorteilhaft erwiesen, wenn die Bodenbearbeitungswerkzeuge über eine Feder an der Arbeitstiefeneinstellung angeordnet sind. Eine solche Ausgestaltung kann den Bodenbearbeitungswerkzeugen eine Sicherung vor überhöhten Betriebskräften bieten. Die Feder kann als Einzel- oder Mehrfachfeder ausgebildet sein. Ferner kann diese insbesondere spiralförmig ausgebildet sein. Von Vorteil im Hinblick auf eine erhöhte Wartungsfreundlichkeit ist eine austauschbare Anordnung der Feder am Werkzeugrahmen und/oder am Bodenbearbeitungswerkzeug.

In weiterer vorteilhafter Ausgestaltung wird vorgeschlagen, dass die Bodenbearbeitungswerkzeuge auswechselbar an der Arbeitstiefeneinstellung angeordnet sind. Es resultiert ein besonders bediener- und wartungsfreundlicher Aufbau. Insbesondere können die Bodenbearbeitungswerkzeuge über geeignete Anbindbleche auswechselbar an der Arbeitstiefeneinstellung angeordnet sein.

Es wird ferner vorgeschlagen, dass jeweils wenigstens zwei Bodenbearbeitungswerkzeuge gemeinsam über eine Arbeitstiefeneinstellung einstellbar sind. Bei einer solchen Ausgestaltung lässt sich die Arbeitstiefe der Bodenbearbeitungswerkzeuge auf besonders zeitsparende Weise einstellen. Ferner kann eine gleichmäßige Einstellung der Arbeitstiefe für die wenigstens zwei Bodenbearbeitungswerkzeuge sichergestellt werden. Je nach Abstand zwischen den einzelnen Pflanzreihen kann es auch vorteilhaft sein, wenn drei oder mehr Bodenbearbeitungswerkzeuge gemeinsam über eine Arbeitstiefeneinstellung einstellbar sind.

Eine bevorzugte Ausführungsform sieht in diesem Zusammenhang vor, dass mehrere Bodenbearbeitungswerkzeuge und/oder Aggregatwerkzeuge gruppenweise über gesonderte Arbeitstiefeneinstellungen einstellbar sind. Es ergibt sich eine zeitsparende, bedienerfreundliche Einstellmöglichkeit der Arbeitstiefe der Bodenbearbeitungswerkzeuge und/oder der Aggregatwerkzeuge. Bevorzugterweise können die Gruppen der Arbeitstiefeneinstellungen flexibel gestaltbar sein.

Es hat sich überdies als vorteilhaft herausgestellt, wenn ein Pflanzensensor zur Erfassung der Pflanzreihen und/oder der Nutzpflanzen und/oder von zwischen den Nutzpflanzen wachsendem Unkraut vorgesehen ist. Über einen solchen Pflanzensensor lassen sich die Pflanzreihen und/oder die Nutzpflanzen und/oder Unkraut zuverlässig erfassen, wodurch sich die Bodenbearbeitung verbessern lässt. Ein solcher Pflanzensensor kann beispielsweise als mechanischer, insbesondere taktiler Sensor oder als optischer Sensor, insbesondere als kamerabasierter Pflanzensensor, ausgebildet sein. Alternativ können auch Sensoren anderer Bauarten einsetzbar sein, welche eine zuverlässige Erfassung der Pflanzreihen und/oder der Nutzpflanzen und/oder von Unkraut ermöglichen.

Konstruktiv vorteilhaft ist es in diesem Zusammenhang, wenn der Pflanzensensor an dem Werkzeugrahmen oder dem Geräterahmen angeordnet ist. Eine solche Anordnung ermöglicht eine störungsfreie Erfassung der Pflanzreihen und/oder der Nutzpflanzen und/oder von Unkraut. Insbesondere kann durch eine solche Anordnung der Abstand des Pflanzensensors zu dem jeweiligen Messobjekt zuverlässig eingehalten werden.

Als besonders vorteilhaft hat es sich herausgestellt, wenn der Pflanzensensor mit einer Steuerung der Schwenkantriebe gekoppelt ist. Auf diese Weise können die von dem Pflanzensensor erfassten Positionen der Pflanzreihen, Nutzpflanzen oder von Unkraut bei der Bewegung der Schwenkausleger berücksichtigt werden. Es kann eine zielgenaue, maßgeschneiderte Bodenbearbeitung erreicht werden. Insbesondere können Beschädigungen von Nutzpflanzen durch die Aggregatwerkzeuge zuverlässig vermieden werden. Alternativ kann die Steuerung der Schwenkantriebe über anderweitige Eingangsgrößen, beispielsweise auf Basis von Datenbankinformationen oder Applikationskarten, angesteuert werden. Ferner kann auch der Werkzeugantrieb mit dem Pflanzensensor gekoppelt sein. Der Pflanzensensor kann auch mit der Steuerung des Werkzeugantriebs und/oder der Arbeitstiefensteuerung gekoppelt sein.

Ferner wird vorgeschlagen, dass die Bodenbearbeitungswerkzeuge als Schare, insbesondere als Hackschare, ausgebildet sind. Solche, etwa zinkenartigen Hackschare erlauben eine flächendeckende und gründliche mechanische Bodenbearbeitung.

In Bezug auf die Aggregatwerkzeuge ist es bevorzugt, wenn diese scheibenförmig, insbesondere sternscheibenförmig ausgebildet sind. Eine solche Ausgestaltung ermöglicht eine besonders gründliche Bodenbearbeitung zwischen den Nutzpflanzen einer Pflanzreihe. Die Aggregatwerkzeuge können dabei insbesondere tellerförmig ausgebildet sein.

Weitere Einzelheiten und Vorteile der Erfindung werden nachfolgend unter Zuhilfenahme der beigefügten Zeichnungen von Ausführungsbeispielen erläutert. Darin zeigen:
- Fig. 1: eine perspektivische Ansicht eines Bodenbearbeitungsgeräts, welches an eine landwirtschaftliche Zugmaschine angebaut ist;
- Fig. 2: eine Seitenansicht gemäß der Darstellung in Fig. 1;
- Fig. 3: eine ausschnittsweise Draufsicht auf das Bodenbearbeitungsgerät gemäß der Darstellung in Fig. 1;
- Fig. 4: eine vergrößerte, teilweise geschnittene Seitenansicht des Bodenbearbeitungsgeräts gemäß der Darstellung in Fig. 2;
- Fig. 5: eine vergrößerte, perspektivische Ansicht eines Bodenbearbeitungsaggregats gemäß der Darstellung in Fig. 4;
- Fig. 6: eine Draufsicht auf ein Bodenbearbeitungsaggregat gemäß der Darstellung in Fig. 5;
- Fig. 7 und 8: weitere, teilweise ausschnittsweise Seitenansichten des Bodenbearbeitungsgeräts gemäß der Darstellung in Fig. 2;
- Fig. 9: eine perspektivische Seitenansicht eines an einem Schwenkausleger angeordneten Aggregatwerkzeugs zur Anordnung an einem Bodenbearbeitungsgerät gemäß der Darstellung in Fig. 8;
- Fig. 10: eine teilweise geschnittene, perspektivische Detailansicht der Kupplungsstelle eines Aggregatwerkzeugs an einem Bodenbearbeitungsgerät gemäß der Darstellung in Fig. 8;
- Fig. 11: eine weitere, perspektivische Detailansicht mit einem im Vergleich zu der Darstellung in Fig. 10 entkoppelten Aggregatwerkzeug;
- Fig. 12: eine vergrößerte, perspektivische Ansicht einer Radaufhängung des Bodenbearbeitungsgeräts gemäß der Darstellung in Fig. 4 und 7;
- Fig. 13 bis 18: verschiedene Detailansichten der Radaufhängung gemäß der Darstellung in Fig. 12;
- Fig. 19: eine ausschnittsweise, teilweise geschnittene, perspektivische Detailansicht des Bodenbearbeitungsaggregats gemäß der Darstellung in Fig. 4;
- Fig. 20: eine teilweise explosionsartige Ansicht des Bodenbearbeitungsaggregats gemäß der Darstellung in Fig. 19;
- Fig. 21: eine ausschnittsweise Seitenansicht des Bodenbearbeitungsgeräts gemäß der Darstellung in Fig. 4;
- Fig. 22: eine perspektivische Detailansicht des Bodenbearbeitungsgeräts gemäß der Darstellung in Fig. 21;
- Fig. 23: eine ausschnittsweise Draufsicht auf das Bodenbearbeitungsgerät gemäß der Darstellung in Fig. 4;
- Fig. 24: eine weitere perspektivische sowie teilweise geschnittene, ausschnittsweise Seitenansicht des Bodenbearbeitungsgeräts gemäß der Darstellung in Fig. 4, und
- Fig. 25 und 26: zwei Seitenansichten des Bodenbearbeitungsgeräts gemäß der Darstellung in Fig. 4, welche sich durch unterschiedliche eingestellte Arbeitstiefen unterscheiden.

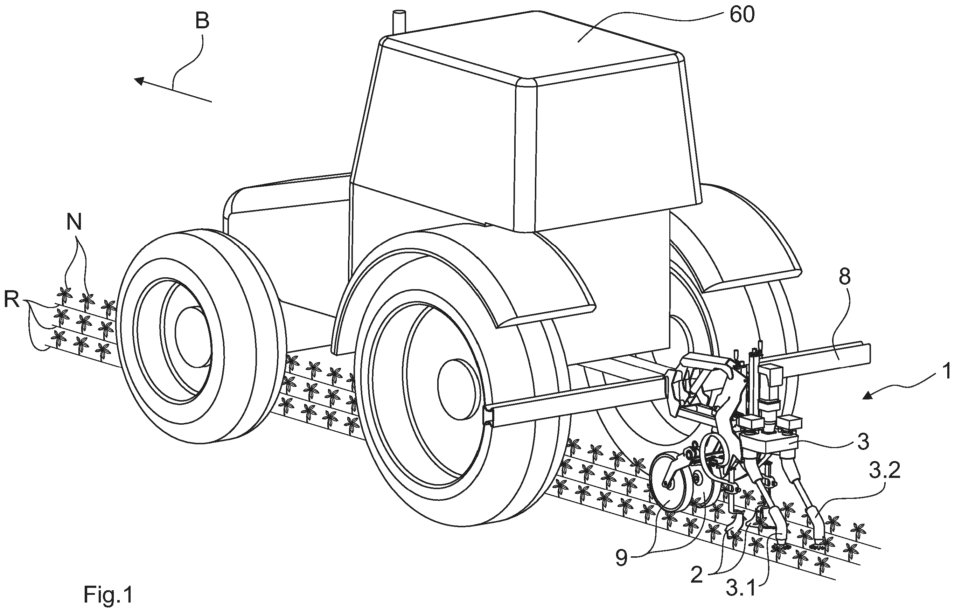

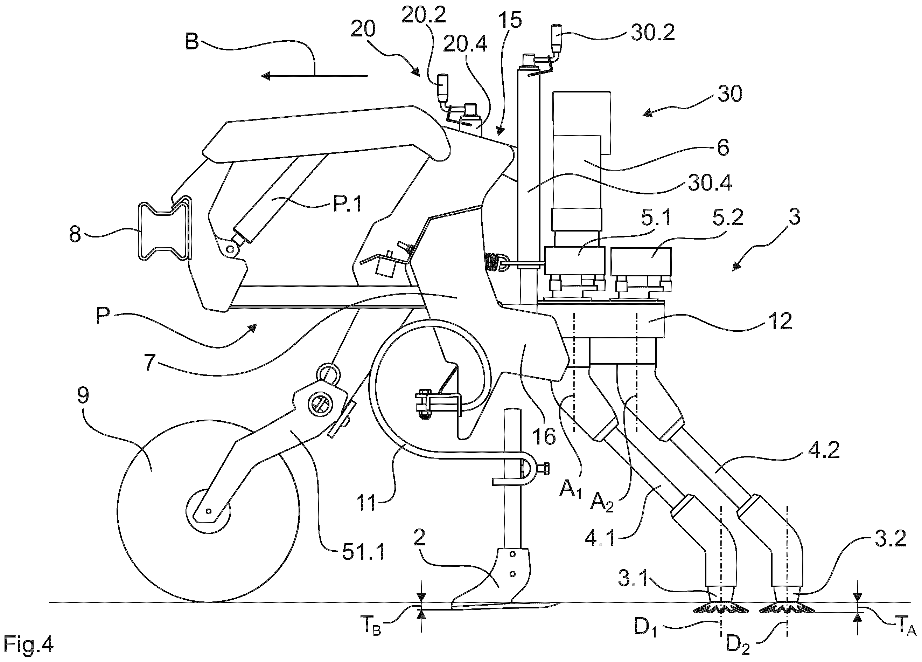

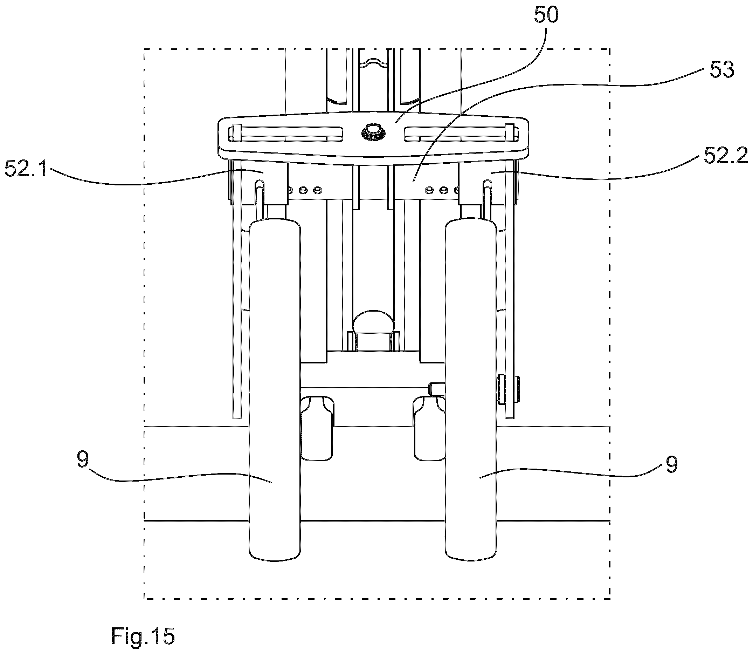

Die Darstellungen in den Fig. 1 bis 26 zeigen ein Bodenbearbeitungsgerät 1 zur Bodenbearbeitung zwischen in Pflanzreihen R angebauten Nutzpflanzen N. Das Bodenbearbeitungsgerät 1 weist ein Bodenbearbeitungsaggregat 3 zur Bodenbearbeitung innerhalb der Pflanzreihen R auf, welches an einem Werkzeugrahmen 7 angeordnet ist, welcher über eine Tiefenführungsrolle 9 gegenüber der Nutzfläche abgestützt ist, vgl. Fig. 4.

Das Bodenbearbeitungsaggregat 3 umfasst zwei Aggregatwerkzeuge 3.1, 3.2, welche ebenfalls zum Eingriff in den Boden der Nutzfläche ausgebildet sind. Die Aggregatwerkzeuge 3.1, 3.2 sind gemäß der Darstellung in Fig. 4 scheibenartig und sternförmig ausgebildet. Es handelt sich hierbei um rotierend angetriebene Aggregatwerkzeuge 3.1, 3.2, welche über einen entsprechenden, an dem Bodenbearbeitungsaggregat 3 angeordneten Werkzeugantrieb 6 angetrieben werden, was nachfolgend noch im Detail erläutert wird.

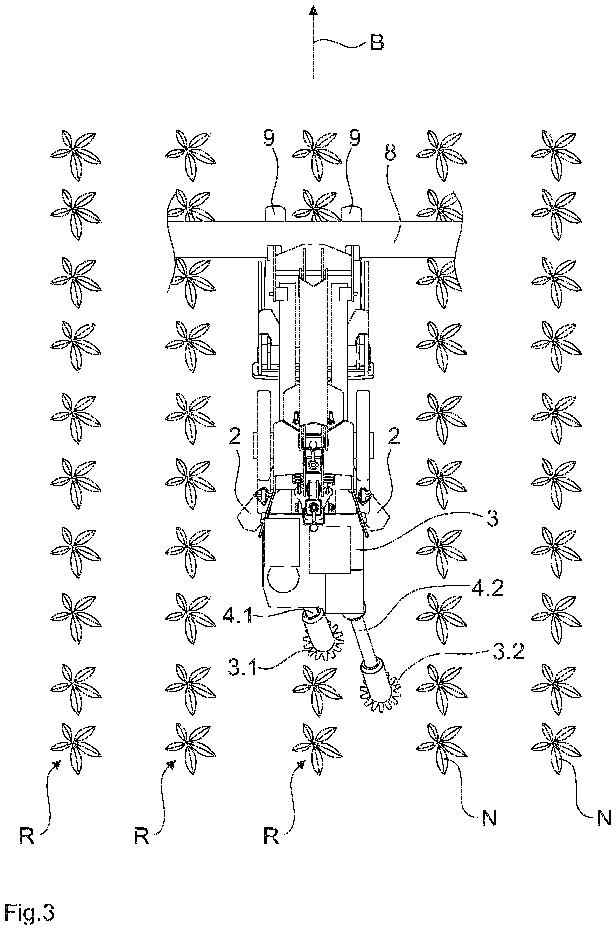

Die Aggregatwerkzeuge 3.1, 3.2 sind zur Bearbeitung des Bodens zwischen den einzelnen Nutzpflanzen N ein und derselben Pflanzreihe R ausgebildet. Zu diesem Zweck sind die Aggregatwerkzeuge 3.1, 3.2 quer zu den Pflanzreihen R bewegbar an dem Bodenbearbeitungsaggregat 3 angeordnet, vgl. Fig. 3. Die Aggregatwerkzeuge 3.1, 3.2 können bedarfsweise jeweils hinter einer Nutzpflanze N in die Pflanzreihe R bewegt und vor der nächsten Nutzpflanze N derselben Pflanzreihe R aus der Pflanzreihe R herausbewegt werden. Zur Ausführung der Schwenkbewegungen sind die Aggregatwerkzeuge 3.1, 3.2 an Schwenkauslegern 4.1, 4.2 angeordnet, vgl. Fig. 4. Die Schwenkausleger 4.1, 4.2 erstrecken sich von der Unterseite des Bodenbearbeitungsaggregats 3 in Richtung der Nutzfläche. An den Bodenbearbeitungsaggregaten 3 sind Schwenkantriebe 5.1, 5.2 vorgesehen, welche mit jeweils einem Schwenkausleger 4.1, 4.2 gekoppelt sind. Die Schwenkantriebe 5.1, 5.2 bewirken Schwenkbewegungen der Schwenkausleger 4.1, 4.2 um die im Wesentlichen senkrecht verlaufenden Schwenkachsen A₁, A₂, vgl. Fig. 4. Die Ausgestaltung der Schwenkantriebe 5.1, 5.2 und der Schwenkausleger 4.1, 4.2 wird ebenfalls in nachfolgenden Absätzen noch detaillierter erläutert.

Zur Veranschaulichung ist gemäß den Darstellungen in Fig. 1 bis 3 jeweils vereinfachend nur ein Bodenbearbeitungsaggregat 3 an dem Bodenbearbeitungsgerät 1 dargestellt. Es versteht sich von selbst, dass in der Praxis in der Regel eine größere Anzahl an Bodenbearbeitungsaggregaten 3 vorgesehen ist, wobei diese Bodenbearbeitungsaggregate 3 üblicherweise nebeneinander angeordnet sind.

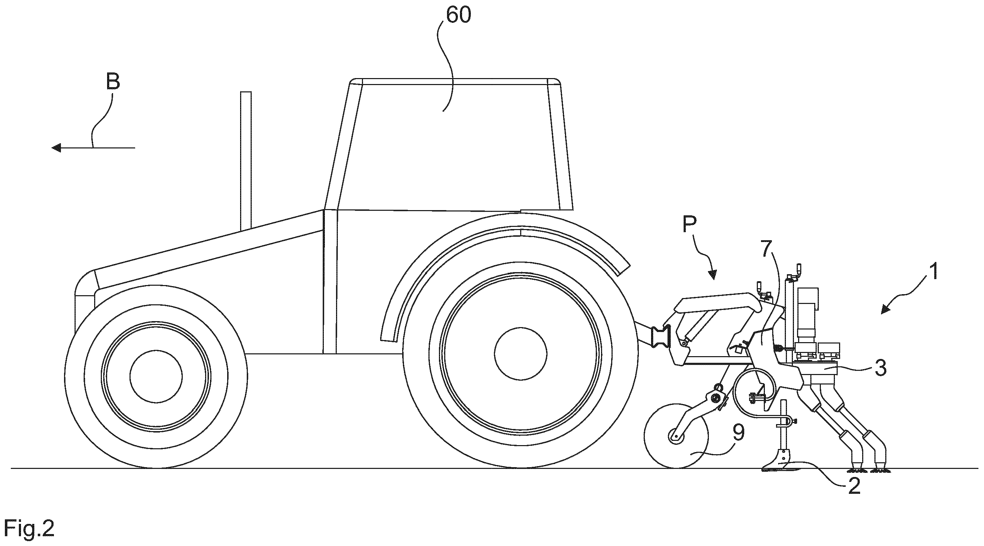

Das Bodenbearbeitungsgerät 1 wird zur Bodenbearbeitung von einer Zugmaschine 60 in einer Bearbeitungsrichtung B, welche in der Regel der Längsausrichtung der Pflanzreihen R entspricht, über die landwirtschaftliche Nutzfläche bewegt, vgl. Fig. 1. Hierfür kommt eine geeignete landwirtschaftliche Zugmaschine 60 zum Einsatz, an welche das Bodenbearbeitungsgerät 1 etwa über eine an dem Geräterahmen 8 angeordnete Kupplungsvorrichtung angekuppelt, angehängt oder angebaut sein kann. Das Bodenbearbeitungsgerät 1 kann je nach Anwendungsfall an der Frontseite, der Heckseite (wie in Fig. 1 und 2 dargestellt) oder auch zwischen den Achsen der Zugmaschine 60 angeordnet sein. Alternativ kann das Bodenbearbeitungsgerät 1 auch selbstfahrend ausgebildet sein und einen eigenen Fahrantrieb aufweisen. Ferner ist auch eine Ausgestaltung als automatisiert, insbesondere auch autonom selbstfahrendes Bodenbearbeitungsgerät 1 denkbar. Darüber hinaus kann es auch vorteilhaft sein, wenn das Bodenbearbeitungsgerät 1 nicht direkt an einer Zugmaschine 60 angekuppelt ist, sondern indirekt. So kann das Bodenbearbeitungsgerät 1 beispielsweise an einem weiteren landwirtschaftlichen Arbeitsgerät angeordnet sein, welches seinerseits an der Zugmaschine 60 angekuppelt sein kann.

Das Bodenbearbeitungsgerät 1 gemäß den in den Fig. 1 bis 26 dargestellten Ausführungsbeispielen umfasst neben dem Bodenbearbeitungsaggregat 3 zur Bodenbearbeitung innerhalb der Pflanzreihen R auch mehrere Bodenbearbeitungswerkzeuge 2 zur Bodenbearbeitung zwischen den Pflanzreihen R. Bei den Bodenbearbeitungswerkzeugen 2 handelt es sich um nicht angetriebene, zinkenartige Scharwerkzeuge. Die Bodenbearbeitungswerkzeuge 2, typischerweise Hackschare, greifen während der Bodenbearbeitung zwischen den Pflanzreihen R in den Boden der Nutzfläche ein und ermöglichen eine Hackbearbeitung des Bodens, vgl. Fig. 4. Auf diese Weise kann insbesondere Unkraut, welches in den Zwischenräumen zwischen den Pflanzreihen R wächst, mechanisch reduziert oder sogar vollständig beseitigt werden. Je nach Konfiguration des Bodenbearbeitungsgeräts 1 können - analog zu den Bodenbearbeitungsaggregaten 3 - mehrere Bodenbearbeitungswerkzeuge 2 quer zu der Bearbeitungsrichtung B nebeneinander angeordnet sein, um mit einer einzigen Überfahrt einen größeren Bereich der Nutzfläche bearbeiten zu können.

Im Folgenden wird anhand der Darstellungen in den Figuren 3 bis 6 zunächst die Ausgestaltung und die Funktion des Bodenbearbeitungsaggregats 3 erläutert, wobei ein Hauptaugenmerk auf dem Werkzeugantrieb 6 liegt.

Die Bodenbearbeitungsaggregate 3 sind in Bearbeitungsrichtung B hinter den Bodenbearbeitungswerkzeugen 2 angeordnet, vgl. Fig. 4. Ein Bodenbearbeitungsaggregat 3 ist dabei modulartig aufgebaut und bildet eine bauliche Einheit, welche etwa auch an bestehenden Bodenbearbeitungsgeräten 1 auf einfache Art und Weise nachgerüstet werden kann. Die Anzahl der Bodenbearbeitungsaggregate 3, die an einem Bodenbearbeitungsgerät 1 angeordnet sind, entspricht in der Regel der Anzahl der in einem Arbeitsgang, d. h. bei einer einzigen Überfahrt, behandelbaren Pflanzreihen R.

Die Bodenbearbeitungsaggregate 3 weisen jeweils einen Werkzeugantrieb 6 zum Antrieb der Aggregatwerkzeuge 3.1, 3.2 auf, vgl. Fig. 4. Bei dem Werkzeugantrieb 6 handelt es sich um einen Motor zum Drehantrieb der Aggregatwerkzeuge 3.1, 3.2. Der Werkzeugantrieb 6 ermöglicht einen gegensinnigen Drehantrieb der beiden sternscheibenartig ausgebildeten Aggregatwerkzeuge 3.1, 3.2. Alternativ kann auch jedes Aggregatwerkzeug 3.1, 3.2 von einem eigenen Werkzeugantrieb angetrieben sein. Ferner können die Aggregatwerkzeuge 3.1, 3.2 auch gleichsinnig drehend angetrieben sein. Es können unterschiedliche geeignete Motoren zum Einsatz kommen, bspw. Elektromotoren, hydraulische Motoren oder pneumatische Motoren.

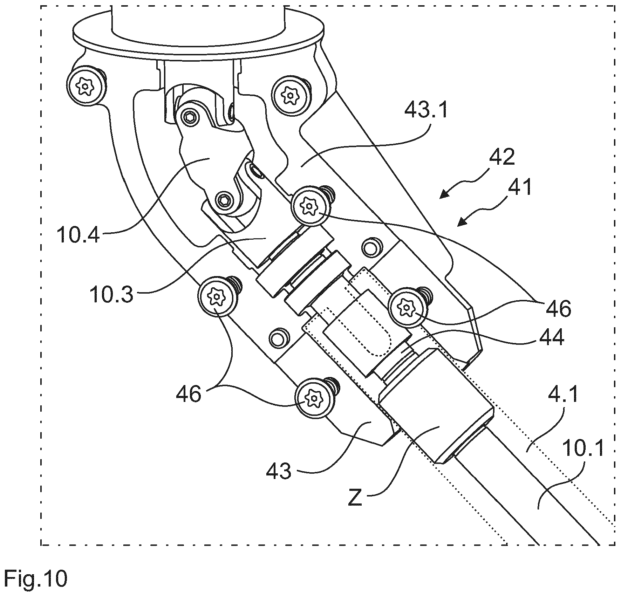

Die Drehbewegungen der Aggregatwerkzeuge 3.1, 3.2 sind jeweils um eine sich im Wesentlichen vertikal erstreckende Drehachse D₁, D₂ gerichtet, vgl. Fig. 4. Die von dem Werkzeugantrieb 6 erzeugten Antriebskräfte werden über Antriebswellen 10.1, 10.2 sowie Umlenkungsgetriebe 10.4 auf die Aggregatwerkzeuge 3.1, 3.2 übertragen. Die Antriebswellen 10.1, 10.2 sowie das Umlenkungsgetriebe 10.4 und entsprechende Antriebswellensegmente 10.3 sind von den hohlprofilartigen Schwenkauslegern 4.1, 4.2 gekapselt aufgenommen, wodurch sie vor Witterungseinflüssen geschützt und zudem aus Sicherheitsgründen unbefugtem Zugriff entzogen sind, vgl. Fig. 10.

Im Folgenden wird anhand der Darstellungen in Fig. 4 bis 6 erläutert, wie die Schwenkausleger 4.1, 4.2 mit den daran angeordneten Aggregatwerkzeugen 3.1, 3.2 über die Schwenkantriebe 5.1, 5.2 verschwenkt werden können.

Die Aggregatwerkzeuge 3.1, 3.2 sind in Bearbeitungsrichtung B zueinander versetzt angeordnet, vgl. Fig. 4. Da die entsprechenden Schwenkausleger 4.1, 4.2 jeweils eine identische, S-förmig abgewinkelte Form aufweisen, sind auch die Schwenkantriebe 5.1, 5.2 entsprechend in Bearbeitungsrichtung B versetzt an dem Antriebsgehäuse 12 des Bodenbearbeitungsaggregats 3 angeordnet, vgl. Fig. 4. Die Schwenkausleger 4.1, 4.2 erstrecken sich von dem Antriebsgehäuse 12 zunächst senkrecht nach unten. An den senkrechten Abschnitt schließt sich ein schräg nach hinten (gemäß der Darstellung in Fig. 4 nach rechts) verlaufender Abschnitt an, welcher in einen weiteren senkrechten Abschnitt mündet, an welchem die Aggregatwerkzeuge 3.1, 3.2 angeordnet sind, vgl. Fig. 4.

Über die als elektrische Schrittmotoren ausgebildeten Schwenkantriebe 5.1, 5.2 lassen sich die Schwenkausleger 4.1, 4.2 unabhängig voneinander verschwenken. Insbesondere lassen sich unterschiedliche Schwenkwinkel einstellen, vgl. Fig. 3. Hierdurch lassen sich Abweichungen und Unregelmäßigkeiten der Verläufe der einzelnen Pflanzreihen R kompensieren. Die Aggregatwerkzeuge 3.1, 3.2 lassen sich nicht nur scherenartig synchron zueinander verschwenken, sondern auch asynchron. Hierdurch lässt sich ein Überschnitt über die von der jeweiligen Pflanzreihe vergebene, sich in Bearbeitungsrichtung erstreckende Nutzpflanzen-Mittellinie ausführen, vgl. Fig. 3.

Die Schwenkachsen A₁, A₂ erstrecken sich im Wesentlichen in vertikaler Richtung, vgl. Fig. 4. Sie verlaufen insoweit parallel zu den Drehachsen D₁, D₂ der Aggregatwerkzeuge 3.1, 3.2. Allerdings kann es abweichend von der Darstellung in Fig. 4 auch vorteilhaft sein, wenn sich die Schwenkachsen A₁, A₂ und/oder die Drehachsen D₁, D₂ schräg zur Vertikalen erstrecken. Durch schräg angestellte Drehachsen D₁, D₂ lassen sich beispielsweise Anstellwinkel für die Aggregatwerkzeuge 3.1, 3.2 realisieren. Durch schräg angestellte Schwenkachsen A₁, A₂ können die Aggregatwerkzeuge 3.1, 3.2 beim Verschwenken zugleich in ihrem Abstand zur Nutzfläche verändert werden, was für gewisse Anwendungen von Vorteil sein kann.

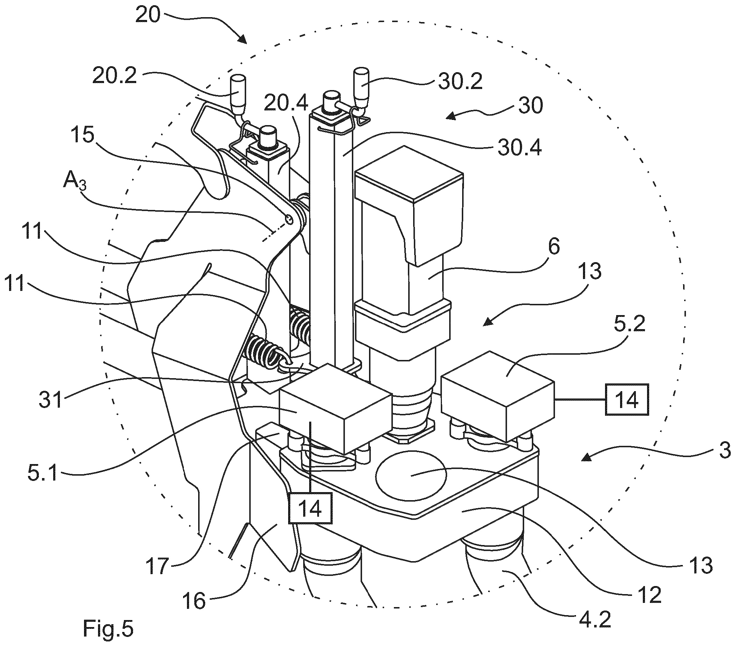

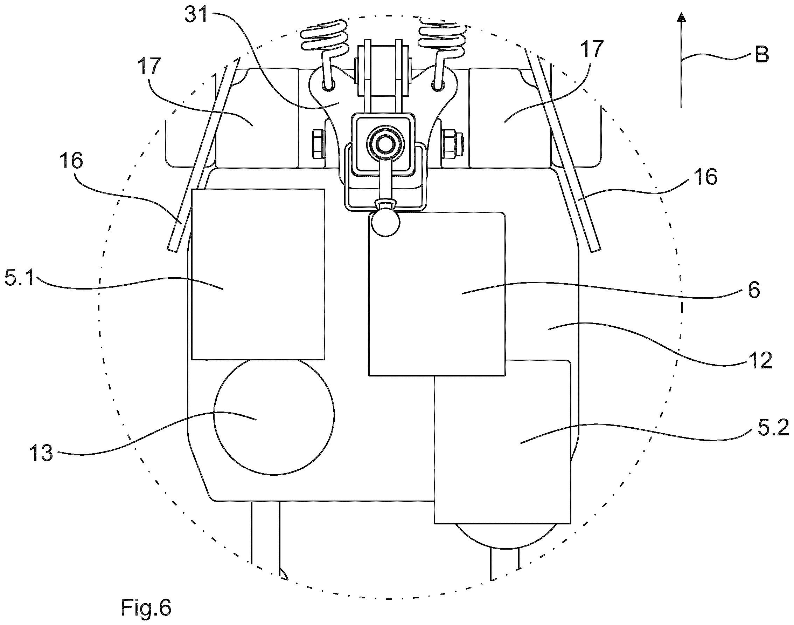

Im Folgenden wird anhand der Darstellungen in Fig. 5 und 6 die konstruktive Ausgestaltung des Bodenbearbeitungsaggregats 3 mit Fokus auf das Antriebsgehäuse 12 erläutert. Das Antriebsgehäuse 12 weist eine rechteckige Grundform auf, vgl. Fig. 6. Die beiden Schwenkantriebe 4.1, 4.2 sind in zwei diagonal gegenüberliegenden Quadranten des rechteckigen Antriebsgehäuses 12 angeordnet. Gemäß der Darstellung in Fig. 6 ist der Schwenkantrieb 5.1 oben links und der Schwenkantrieb 5.2 unten rechts angeordnet.

Wie dies der Darstellung in Fig. 5 zu entnehmen ist, weist das Antriebsgehäuse 12 überdies ein Getriebe 13 zur Übertragung der Antriebskräfte des Werkzeugantriebs 6 auf die Aggregatwerkzeuge 3.1, 3.2 auf. Das Getriebe 13 und der Werkzeugantrieb 6 sind in den übrigen Quadranten des rechteckigen Antriebsgehäuses 12 angeordnet, vgl. Fig. 6. An der Position des Getriebes 13 kann alternativ auch ein zweiter Werkzeugantrieb 6 angeordnet sein.

Das Bodenbearbeitungsaggregat 3 ist in Bearbeitungsrichtung B hinter den Bodenbearbeitungswerkzeugen 2 angeordnet, vgl. Fig. 4. Das Bodenbearbeitungsaggregat 3 ist dabei als Montageeinheit ausgebildet, welche auf einfache und montagefreundliche Weise austauschbar an dem Werkzeugrahmen 7 angeordnet ist, vgl. Fig. 4.

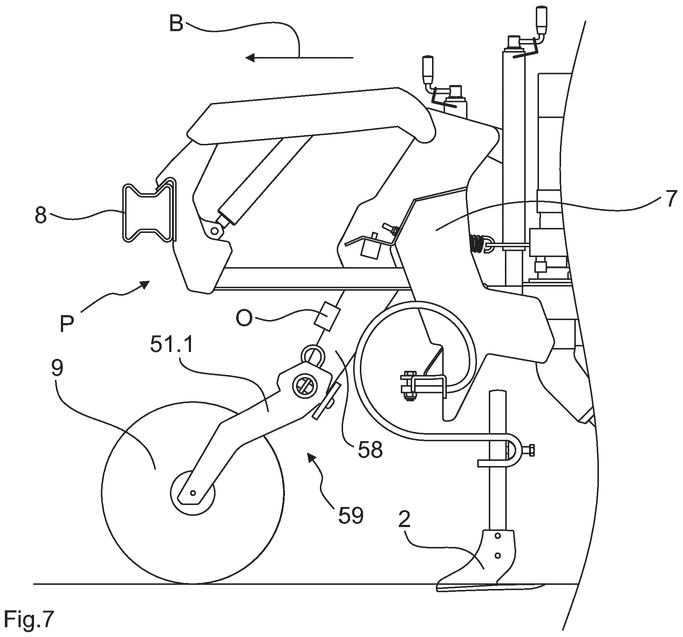

Wie dies der Darstellung in Fig. 7 entnommen werden kann, weist das Bodenbearbeitungsgerät 1 auch einen Pflanzensensor O auf, welcher an dem Werkzeugrahmen 7, konkret an dem Tragarm 58 der Tiefenführungsrolle 9, angeordnet ist. Bei dem Pflanzensensor O handelt es sich um einen optischen Sensor zur kamerabasierten Erfassung der Pflanzreihen R, der einzelnen Nutzpflanzen N oder von zwischen den Nutzpflanzen N wachsendem Unkraut. Der Pflanzensensor O ist in einer in den Figuren nicht dargestellten Weise mit einer Steuerung 14 der Schwenkantriebe 4.1, 4.2 gekoppelt, vgl. auch Fig. 5. Auf diese Weise können die Aggregatwerkzeuge 3.1, 3.2 in Abhängigkeit der Signale des Pflanzensensors O angesteuert werden, wodurch eine bedarfsweise Bodenbearbeitung realisiert werden kann. Selbstverständlich können an einem Bodenbearbeitungsgerät 1 mehrere Pflanzensensoren O vorgesehen sein. Ferner können nicht nur optische Pflanzensensoren O, sondern auch Sensoren anderer geeigneter Messprinzipien zur Erfassung der Pflanzreihen R, Nutzpflanzen N oder von Unkraut zum Einsatz kommen. Darüber hinaus kann der Pflanzensensor O auch an anderen Bauteilen oder Komponenten des Bodenbearbeitungsgeräts 1 angeordnet sein.

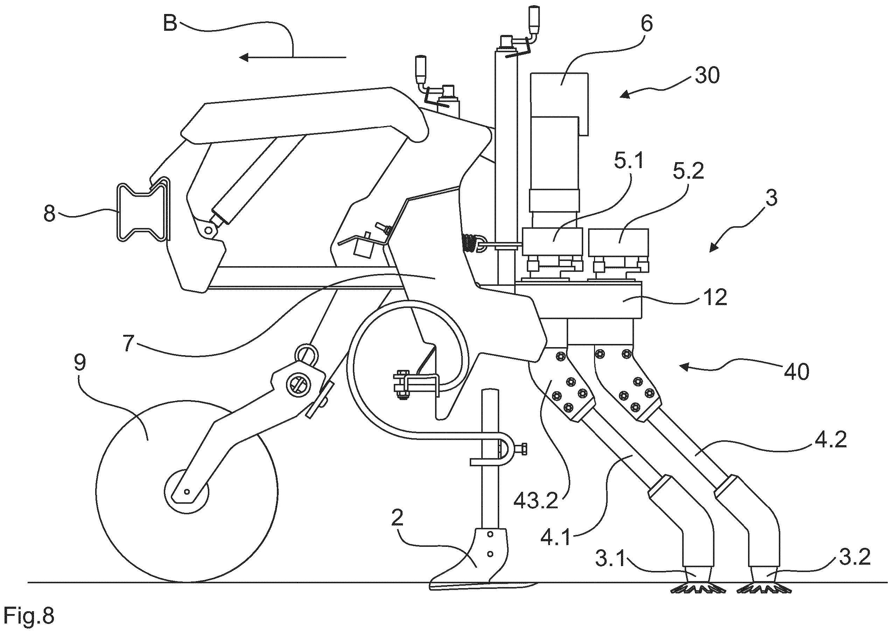

Die Aggregatwerkzeuge 3.1, 3.2 des Bodenbearbeitungsgeräts 1 lassen sich auf bedienerfreundliche Art und Weise mit geringem Montageaufwand austauschen, was in den nachfolgenden Absätzen anhand der Darstellungen in Fig. 8 bis 11 erläutert wird.

Bei dem Bodenbearbeitungsgerät 1 sind die Aggregatwerkzeuge 3.1, 3.2 über jeweils eine Schnellkupplung 40 auswechselbar an dem Bodenbearbeitungsaggregat 3 angeordnet. Die Ausgestaltung der Schnellkupplung 40 wird nachfolgend anhand der Darstellungen in Fig. 8 bis 11 erläutert.

Wie dies der Darstellung in Fig. 8 zu entnehmen ist, sind die Schnellkupplungen 40 jeweils im Bereich der Schwenkausleger 4.1, 4.2 angeordnet, und zwar an deren den Aggregatwerkzeugen 3.1, 3.2 abgewandten Enden. Über die Schnellkupplungen 40 lassen sich die Aggregatwerkzeuge 3.1, 3.2 gemeinsam mit den daran befestigten Schwenkauslegern 4.1, 4.2 schnell und einfach austauschen. Ferner lassen sich durch eine solche Ausgestaltung auch unterschiedliche Schwenkausleger 4.1, 4.2, etwa Schwenkausleger 4.1, 4.2 mit einem längeren oder gekrümmten Mittelsegment, einfach montieren. Die Schnellkupplungen 40 können jedoch bedarfsweise auch an anderen Stellen der Schwenkausleger 4.1, 4.2 angeordnet sein, bspw. näher an den Aggregatwerkzeugen 3.1, 3.2.

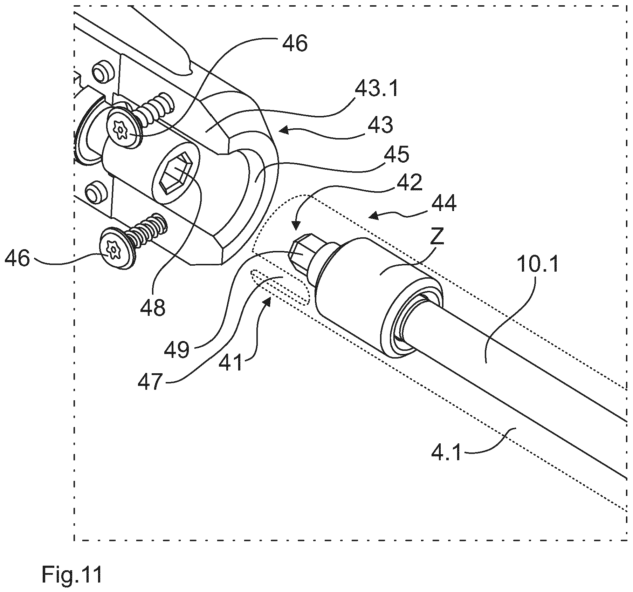

Die Schnellkupplungen 40 sind nach Art einer Steckverbindung ausgebildet, vgl. Fig. 11. Dabei ist jeweils eine bodenbearbeitungsaggregatseitige Buchse 43 und ein aggregatwerkzeugseitiger Stecker 44 vorgesehen. Die Buchse 43 und der Stecker 44 sind korrespondierend ausgebildet. Konkret sind an der Buchse 43 und dem Stecker 44 korrespondierend ausgebildete Formschlusselemente angeordnet. Beim Einstecken des Steckers 44 in die Buchse 43 werden diese Formschlusselemente miteinander in Verbindung gebracht.

Der Darstellung gemäß Fig. 11 ist zu entnehmen, dass an dem Stecker 44 eine Ausnehmung 47 als Formschlusselement vorgesehen ist. Beim Einstecken des Steckers 44 in die Buchse 43 gelangt die Ausnehmung 47 in Eingriff mit einem in den Figuren nicht dargestellten korrespondierenden stiftartigen Vorsprung, welcher im Inneren der Buchse 43 angeordnet ist. Der Vorsprung und die Ausnehmung 47 bilden im montierten Zustand eine formschlüssige Verbindung. Anstelle von Vorsprüngen und Ausnehmungen können auch anderweitige Formschlusselemente vorgesehen sein. Ferner können auch jeweils mehrere korrespondierende Formschlusselemente an Stecker 44 und Buchse 43 angeordnet sein.

Durch die formschlüssige Verbindung zwischen dem buchsenseitigen Vorsprung und der steckerseitigen Ausnehmung 47 ist eine Befestigungsschnittstelle 41 gebildet. Die Befestigungsschnittstelle 41 erlaubt eine drehfeste Befestigung der Aggregatwerkzeuge 3.1, 3.2 an dem Bodenbearbeitungsaggregat 3. Aufgrund der in gegenseitiger Wirkverbindung stehenden Formschlusselemente an Stecker 44 und Buchse 43 lassen sich die Schwenkausleger 4.1, 4.2 nicht um deren Längsachsen verdrehen. Die Schwenkbewegungen der Schwenkausleger 4.1, 4.2, welche durch die Schwenkantriebe 5.1, 5.2 angetrieben werden, lassen sich zuverlässig und wiederholgenau ausführen.

Neben der Befestigungsschnittstelle 41 umfassen die Schnellkupplungen 40 jeweils auch eine Antriebsschnittstelle 42 zur Übertragung von Antriebskräften von dem Werkzeugantrieb 6 auf die Aggregatwerkzeuge 3.1, 3.2. Die Antriebsschnittstelle 42 umfasst eine buchsenseitige Steckaufnahme 48, welche gemäß der Darstellung in Fig. 11 als Stecknuss für einen Sechskant ausgebildet ist. Die Steckaufnahme 48 ist mit einem Antriebswellensegment 10.3 verbunden, welches über ein Umlenkungsgetriebe 10.4 mit dem Werkzeugantrieb 6 gekoppelt ist. Ferner umfasst die Antriebsschnittstelle 42 einen aggregatwerkzeugseitigen Steckansatz 49, welcher gemäß der Darstellung in Fig. 11 als Sechskant ausgebildet ist. Der Steckansatz 49 ist korrespondierend zu der Steckaufnahme 48 ausgebildet. Der Steckansatz 49 ist an einem Ende der aggregatwerkzeugseitigen Antriebswelle 10.1 angeordnet, welches dem angetriebenen Aggregatwerkzeug 3.1 gegenüberliegend ist, vgl. Fig. 11. Beim Einstecken des Steckers 44 in die Buchse 43 greift der Steckansatz 49 in die Steckaufnahme 48. Es wird eine formschlüssige Verbindung gebildet, welche die Übertragung von Drehmomenten von dem Antriebswellensegment 10.3 auf die Antriebswelle 10.1 ermöglicht.

Anstelle eines als Sechskant ausgebildeten Steckansatzes 49 und einer entsprechend ausgebildeten Steckaufnahme 48 kann die Antriebsschnittstelle 42 auch durch beliebige andere korrespondierende Formschlusselemente gebildet sein, welche eine Übertragung von Drehmomenten von dem Werkzeugantrieb 6 auf die angetriebenen Aggregatwerkzeuge 3.1, 3.2 ermöglichen.

Anhand der Darstellung in Fig. 11 ist zu erkennen, dass die Befestigungsschnittstelle 41 und die Antriebsschnittstelle 42 koaxial zueinander angeordnet sind. Die Antriebsschnittstelle 42 ist im Inneren des rohrförmigen Schwenkauslegers 4.1 angeordnet. Zu ihrer Zentrierung innerhalb des Schwenkauslegers 4.1 ist ein Zentrierelement Z vorgesehen, vgl. Fig. 11. Die Befestigungsschnittstelle 41 ist hingegen radial außen, am Umfang des rohrförmigen Schwenkauslegers 4.1 angeordnet, vgl. ebenfalls Fig. 11.

Um das Einstecken des Steckers 44 in die Buchse 43 zu erleichtern, sind verschiedene Kupplungshilfen 45 vorgesehen, vgl. Fig. 11. Eine solche Kupplungshilfe 45 ist als Einführschräge an der Buchse 43 angeordnet und ermöglicht ein einfaches Einführen des Steckers 44 in die Buchse 43. Entsprechende korrespondierend ausgebildete Einführschrägen können auch an dem Stecker 44 angeordnet sein, falls erforderlich. Überdies weisen auch die Steckaufnahme 48 und der Steckansatz 49 Kupplungshilfen 45 auf, welche das Herstellen einer formschlüssigen Verbindung der Antriebsschnittstelle 42 vereinfachen, vgl. Fig. 11.

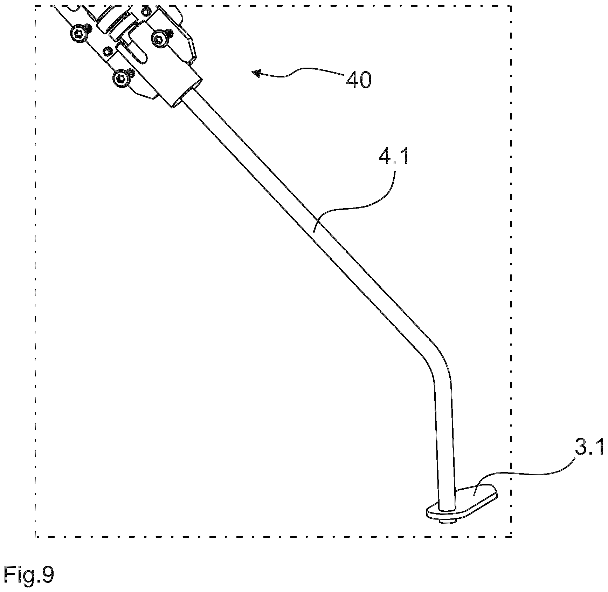

Während die Befestigungsschnittstelle 41 der Schnellkupplung 40 bei jedem Kupplungsvorgang zur drehfesten Befestigung der Schwenkausleger 4.1, 4.2 und der daran angeordneten Aggregatwerkzeuge 3.1, 3.2 verwendet wird, kann die Antriebsschnittstelle 42 optional verwendet werden. Sollen angetriebene Aggregatwerkzeuge 3.1, 3.2 verwendet werden, wird die Antriebsschnittstelle 42 automatisch verwendet, um eine Übertragung von Drehmomenten von dem Werkzeugantrieb 6 auf die Aggregatwerkzeuge 3.1, 3.2 zu ermöglichen. Für gewisse Anwendungsfälle kann es jedoch gewünscht sein, keine aktiv angetriebenen Aggregatwerkzeuge 3.1, 3.2 einzusetzen, sondern passive, nicht angetriebene Aggregatwerkzeuge 3.1, 3.2, wie sie in Fig. 9 dargestellt sind. Wenn solche nicht angetriebenen Aggregatwerkzeuge 3.1, 3.2 über die Schnellkupplung 40 mit dem Bodenbearbeitungsaggregat 3 verbunden werden, wird die Antriebsschnittstelle 42 nicht verwendet. Denn der Schwenkausleger 4.1 von nicht angetriebenen Aggregatwerkzeugen 3.1, 3.2 weist keine Antriebswelle 10.1 und somit auch keinen Steckansatz 49 auf. Aufgrund der Anordnung der Befestigungsschnittstelle 41 am Umfang des Schwenkauslegers 4.1 kann diese jedoch trotzdem verwendet werden, ohne dass ein Steckansatz 49 in die Steckaufnahme 48 eingesteckt ist. Auf diese Weise wird eine schnelle und leicht handhabbare Wechselmöglichkeit zwischen angetriebenen und nicht angetriebenen Aggregatwerkzeugen 3.1, 3.2 bereitgestellt.

Im Folgenden wird die Ausgestaltung der Buchse 43 anhand der Darstellungen in Fig. 8 und 10 erläutert. Die Buchse 43 ist nach Art einer Muffe ausgebildet. Sie weist zwei Halbschalen 43.1, 43.2 auf, welche zum Fixieren des Steckers 44 über Befestigungselemente 46 miteinander verbunden sind, vgl. Fig. 8. Die Halbschalen 43.1, 43.2 umgreifen im montierten Zustand die Schnellkupplung 40 und bieten dieser einen Schutz vor Umgebungseinflüssen, vgl. Fig. 8. Die Halbschalen 43.1, 43.2 sind über sechs als Gewindebolzen ausgebildete Befestigungselemente 46 miteinander verbunden, welche in korrespondierenden, mit Gewinden versehenen Befestigungsbohrungen geschraubt sind, vgl. Fig. 10. Anstelle von Gewindebolzen und Befestigungsbohrungen können auch andere Befestigungselemente 46 verwendet werden, insbesondere auch werkzeuglos betätigbare Befestigungselemente 46.

Anhand der Darstellungen in Fig. 8 und 10 ist auch zu erkennen, dass die Halbschalen 43.1, 43.2 nicht nur die Befestigungsschnittstelle 41 und die Antriebsschnittstelle 42 umgreifen, sondern auch das Umlenkungsgetriebe 10.4. Somit ist auch das Umlenkungsgetriebe 10.4 durch die Halbschalen 43.1, 43.2 vor negativen Umgebungseinflüssen geschützt. Zudem ist dieses wartungsfreundlich leicht zugänglich, da nur die Befestigungselemente 46 gelöst werden müssen, um eine der Halbschalen 43.1, 43.2 zu entfernen.

Das Bodenbearbeitungsgerät 1 zeichnet sich ferner dadurch aus, dass dieses jederzeit eine stabile Fahrlage aufweist, bei welcher ein Verlust des Bodenkontakts durch die Tiefenführungsrollen 9 zuverlässig vermieden werden kann, woraus eine gleichmäßigere Bodenbearbeitung resultiert. Dies wird im Folgenden anhand der Darstellungen in Fig. 4, 7 sowie 12 bis 18 erläutert.

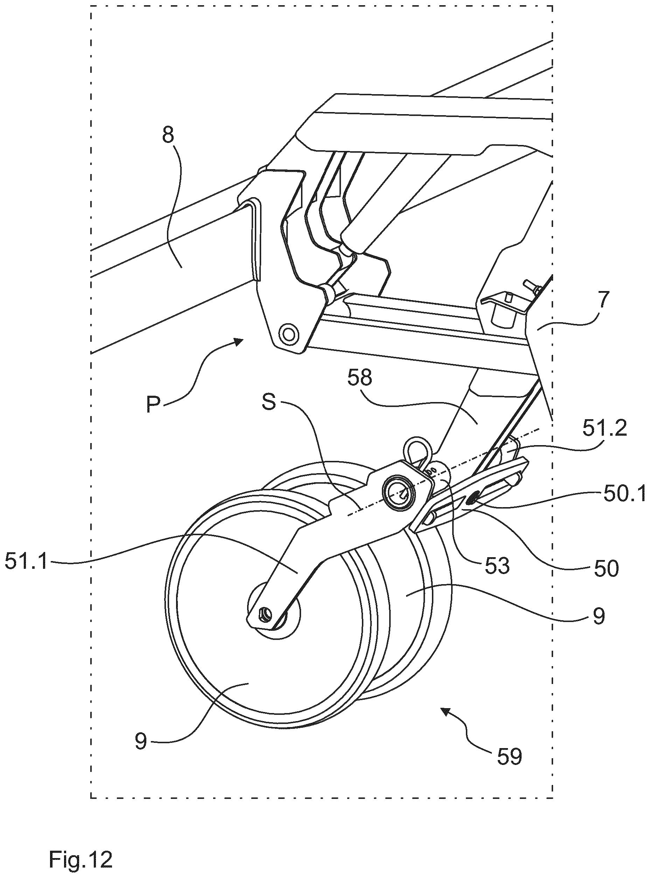

Jeweils zwei in Bearbeitungsrichtung B vor den Bodenbearbeitungswerkzeugen 2 angeordnete Tiefenführungsrollen 9 sind über eine gemeinsame Radaufhängung 59 an dem Werkzeugrahmen 7 befestigt, welche sich in Bearbeitungsrichtung B schräg zur Vertikalen erstreckt, vgl. Fig. 7. Zwischen der Vertikalen und einem als Doppelprofil ausgebildeten Tragarm 58 der Radaufhängung 59 wird ein spitzer Winkel eingeschlossen, vgl. ebenfalls Fig. 7. Der Tragarm 58 ist einseitig mit dem Werkzeugrahmen 7 verbunden und weist an seinem anderen Ende ein Achselement 53 auf, welches sich quer zu der Erstreckungsrichtung des Tragarms 58 erstreckt, vgl. Fig. 12.

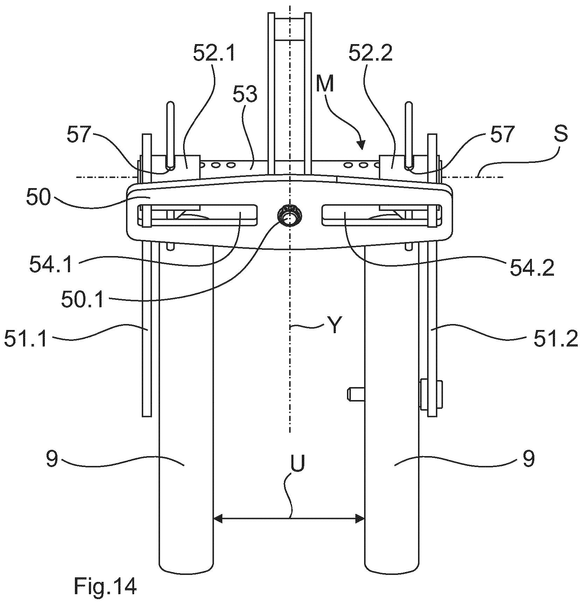

An dem Achselement 53 sind die beiden Tiefenführungsrollen 9 jeweils über einen Längslenker 51.1, 51.2 schwenkbar angeordnet, vgl. Fig. 12. Zu diesem Zweck ist jeweils eine an den Durchmesser des Achselements 53 angepasste Buchse 52.1, 52.2 an einem dem Tiefenführungsrad 9 entgegengesetzten Ende der Längslenker 51.1, 51.2 vorgesehen, welche auf das Achselement 53 aufgesteckt ist, vgl. Fig. 14. Durch die Schwenkbewegungen des Längslenkers 51.1, 51.2 um die Schwenkachse S können Bodenunebenheiten kompensiert werden. Die Schwenkachse S erstreckt sich dabei entlang des Achselements 53, quer zu der Bearbeitungsrichtung B, vgl. Fig. 2 und 12.

Bei dem erfindungsgemäßen Bodenbearbeitungsgerät sind zwei benachbarte Tiefenführungsrollen 9 über einen Wipphebel 50 mechanisch miteinander gekoppelt und gegenüber dem Werkzeugrahmen 7 pendelnd angeordnet. Nachfolgend wird zunächst anhand der Darstellungen in Fig. 12 bis 14 die Ausgestaltung und Funktion des Wipphebels 50 erläutert.

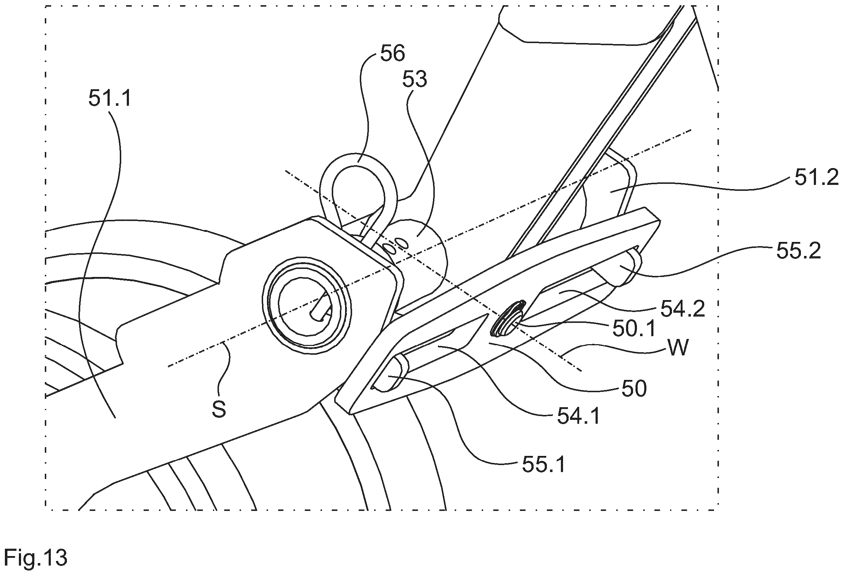

Anhand der Darstellungen in Fig. 13 und 14 ist zu erkennen, dass der Wipphebel 50 als längliches, flaches Bauelement mit zwei spiegelbildlich ausgebildeten Flügeln ausgeführt ist. Der Wipphebel 50 ist um eine durch dessen Mittelpunkt verlaufende Wippachse W wippend oder pendelnd an der Radaufhängung 59 angeordnet. Zur pendelnden Lagerung des Wipphebels 50 um die Wippachse W ist ein im Bereich des bodenseitigen Endes des Tragarms 58 angeordneter Drehpunkt 50.1 vorgesehen, an welchem der Wipphebel 50 mittig lösbar befestigt ist, vgl. Fig. 13.

Der Wipphebel 50 ist grundsätzlich ausgehend von der in Fig. 12 bis 14 dargestellten Neutralstellung, in welcher sich der Wipphebel 50 im Wesentlichen waagerecht erstreckt, sowohl im Uhrzeigersinn als auch im Gegenuhrzeigersinn um die Wippachse W drehbar angeordnet. Aufgrund der mechanischen Kopplung mit den Tiefenführungsrollen 9 sind die Drehbewegungen des Wipphebels 50 jedoch auf einen eingeschränkten Drehwinkelbereich begrenzt, welcher in der Regel deutlich geringer als ± 90 Grad, insbesondere deutlich geringer als ± 45 Grad ist.

Der Wipphebel 50 weist zwei sich radial von dessen Mittelpunkt erstreckenden Führungsausnehmungen 54.1, 54.2 auf, vgl. Fig. 14. Die Führungsausnehmungen 54.1, 54.2 sind als rechteckige, taschenartige Aussparungen ausgebildet, welche spiegelbildlich an den beiden Flügeln des Wipphebels 50 angeordnet sind.

Die mechanische Kopplung des Wipphebels 50 mit den Tiefenführungsrollen 9, welche deren pendelnde Anordnung ermöglicht, wird nachfolgend anhand der Darstellung in Fig. 13 erläutert. Wie vorstehend bereits beschrieben, sind die Tiefenführungsrollen 9 jeweils an einem Längslenker 51.1, 51.2 angeordnet. Die Längslenker 51.1, 51.2, welche als mehrfach abgewinkelte Bauteile ausgebildet sind, sind über die Buchsen 52.1, 52.2 um die Schwenkachse S schwenkbar an dem Achselement 53 gelagert. Die Buchsen 52.1, 52.2 sind einstückig mit den Längslenkern 51.1, 51.2 verbunden. Alternativ können diese auch mehrstückig als separate Bauteile ausgeführt sein.

Die Längslenker 51.1, 51.2 weisen jeweils einen Führungsvorsprung 55.1, 55.2 auf, vgl. Fig. 13. Die Führungsvorsprünge 55.1, 55.2 erstrecken sich als im Wesentlichen rechteckige, nasenartige Projektionen an den der jeweiligen Tiefenführungsrolle 9 abgewandten Enden der Längslenker 51.1, 51.2. Die Führungsvorsprünge 55.1, 55.2 greifen jeweils in eine Führungsausnehmung 54.1, 54.2 des Wipphebels 50 ein, vgl. Fig. 13. Die Breite der Führungsvorsprünge 55.1, 55.2 korrespondiert mit der Höhe der Führungsausnehmungen 54.1, 54.2. Aufgrund des Eingriffs der Führungsvorsprünge 55.1, 55.2 in die Führungsausnehmungen 54.1, 54.2 sind die beiden Längslenker 51.1, 51.2 über den Wipphebel 50 miteinander gekoppelt. Eine Schwenkbewegung des einen Längslenkers 51.1 wird über den Wipphebel 50 in eine betragsgleiche, gegensinnige Bewegung des anderen Längslenkers 51.2 übertragen. Da Gleiches auch in umgekehrter Richtung gilt, ergibt sich eine pendelnde Anordnung um die Wippachse W.

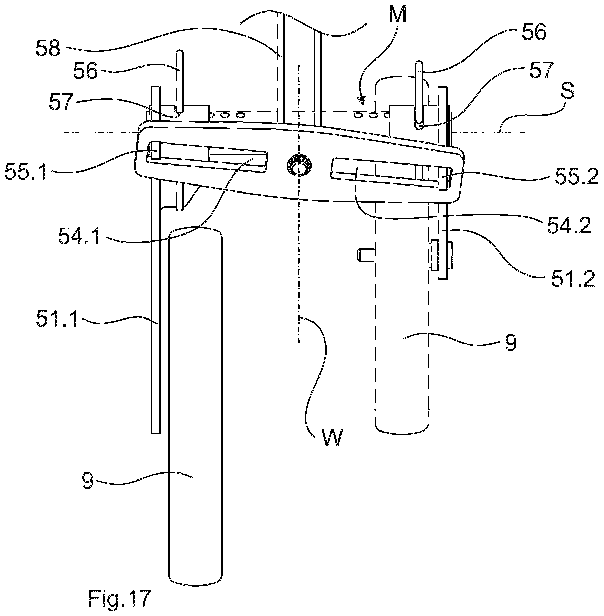

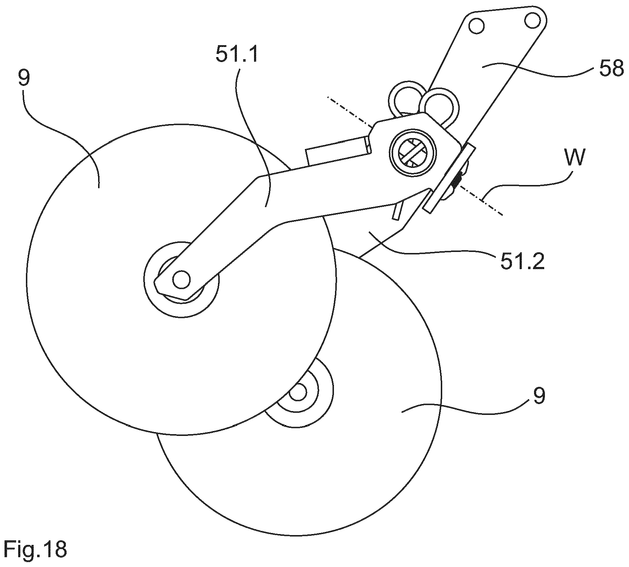

Die Darstellungen in den Fig. 17 und 18 zeigen die Radaufhängung 59 in zwei beispielhaften Betriebszuständen. In der Darstellung gem. Fig. 17 ist der rechte Längslenker 51.2 mit dem rechten Tiefenführungsrad 9 entgegen der Nutzfläche um die Schwenkachse S nach oben verschwenkt, beispielsweise aufgrund einer Bodenunebenheit. Über den Führungsvorsprung 55.2 und die Führungsausnehmung 54.2 ist der Wipphebel 50 um die Wippachse W um einen gewissen Winkel im Uhrzeigersinn aus der Neutralstellung verschwenkt. Auf der gegenüberliegenden Seite ist der Längslenker 51.1 und das damit gekoppelte Tiefenführungsrad 9 entsprechend der Kopplung der Führungsausnehmung 54.1 mit dem Führungsvorsprung 55.1 in Richtung der Nutzfläche nach unten verschwenkt. Die Darstellung in Fig. 18 zeigt den entgegengesetzten Fall, bei welchem der Längslenker 51.1 entgegen der Nutzfläche um die Schwenkachse S nach oben verschwenkt ist und der Längslenker 51.2 entsprechend nach unten. Die beiden Längslenker 51.1, 51.2 pendeln zwischen den beiden Betriebszuständen gemäß den Darstellungen in Fig. 17 und 18.

Die Längslenker 51.1, 51.2 sind über die Buchsen 52.1, 52.2 mit jeweils einem Arretierelement 56 entlang der Schwenkachse S axial unbeweglich und zugleich um die Schwenkachse S drehbar an dem Achselement 53 arretiert, vgl. Fig. 13 und 14. Das Arretierelement 56 ist als Federstecker, Splint oder entsprechendes Bolzenelement ausgebildet, welcher korrespondierende Ausnehmungen sowohl an der Buchse 52.1, 52.2 als auch dem Achselement 53 durchgreift. Die Größe der Ausnehmungen ist in axialer Richtung an den Durchmesser des Arretierelements 56 angepasst, woraus eine axiale Fixierung resultiert. In radialer Richtung sind die Ausnehmungen der Buchsen 52.1, 52.2 jedoch länglich ausgebildet, so dass den Buchsen 52.1, 52.2 gewisse Schwenk- bzw. Drehbewegungen um die Schwenkachse S erlaubt werden können.

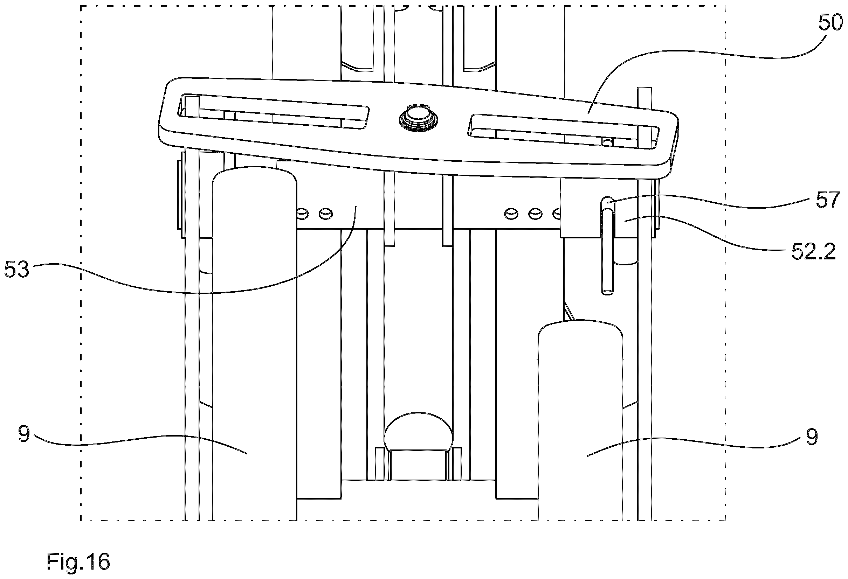

Die Schwenkbewegungen der Buchsen 52.1, 52.2 sind durch an den Ausnehmungen vorgesehene Schwenkanschläge 57 begrenzbar, vgl. Fig. 16. Wie dies etwa in der Darstellung gemäß Fig. 17 anhand des linken Längslenkers 51.1 erkannt werden kann, wirkt das Arretierelement 56 mit dem Schwenkanschlag 57 zusammen. Entsprechende Schwenkanschläge 57 können für beide Schwenkrichtungen vorgesehen sein. Während der Schwenkbewegungen der Längslenker 51.1, 51.2 ist das jeweilige Arretierelement 56 in den Ausnehmungen geführt.

Der durch die Schwenkanschläge 57 für Schwenkbewegungen der Buchsen 52.1, 52.2 zur Verfügung stehende Schwenkweg wird infolge der Erfindung doppelt so effizient ausgenutzt wie im Stand der Technik bisher bekannt. Durch die betragsgleiche, gegensinnige Bewegung des einen Längslenkers 51.1 bei einer Schwenkbewegung des anderen Längslenkers 51.2 ist zur Überwindung eines Hindernisses im Vergleich zu einer nicht gekoppelten Anordnung der Tiefenführungsrollen 9 nur der halbe Schwenkweg zurück-zulegen. Dies ist dadurch bedingt, dass sich die zur Überwindung des Hindernisses erforderliche Höhendifferenz zu gleichen Teilen auf Schwenkbewegungen der Längslenker 51.1, 51.2 der ausweichenden Tiefenführungsrolle 9 wie der nicht ausweichenden Tiefenführungsrolle 9 aufteilen. Anders gesagt können bei einem gegebenen durch die Schwenkanschläge 57 für Schwenkbewegungen der Buchsen 52.1, 52.2 zur Verfügung stehenden Schwenkweg infolge der Erfindung doppelt so hohe Hindernisse überwunden werden.

Die Längslenker 51.1, 51.2 sind zur Einstellung der Spurweite U der benachbarten Tiefenführungsrollen 9 relativ zu dem Achselement 53 bewegbar angeordnet, was nachfolgend anhand der Darstellung in Fig. 14 bis 16 erläutert wird.

Ausgehend von einer maximalen Spurweite U, wie sie in Fig. 14 bis 16 dargestellt ist, lassen sich die Längslenker 51.1, 51.2 manuell aufeinander zu bewegen. Hierbei wird die jeweilige Buchsen 52.1, 52.2 gegenüber dem Achselement 53 axialverschoben, wodurch sich die Spurweite U verringern lässt. Die mit den Führungsvorsprüngen 55.1, 55.2 zusammenwirkenden Führungsausnehmungen 54.1, 54.2 dienen als Führungen bei der Einstellung der Spurweite U.

Die Spurweite U ist im vorliegenden Ausführungsbeispiel stufenweise einstellbar. Wie dies der Fig. 14 entnommen werden kann, ist ein Lochmuster M an dem Achselement 53 angeordnet, welches die verschiedenen einstellbaren Spurweiten U definiert. Durch Fixieren des Arretierelements 56 in den unterschiedlichen Bohrungen des Lochmusters M lassen sich verschiedene Spurweiten U realisieren. Die Spurweiten U können auf die Pflanzreihen R abgestimmt sein. Insbesondere kann die Spurweite U so gewählt und eingestellt werden, dass die Nutzpflanzen N bei der Überfahrt mit dem Bodenbearbeitungsgerät 1 nicht beschädigt werden.

Den Darstellungen gemäß Fig. 14 bis 16 ist ferner zu entnehmen, dass die Radaufhängung 59 einen symmetrischen Grundaufbau in Bezug auf eine sich entlang der Bearbeitungsrichtung B erstreckende Symmetrieebene Y aufweist. Die Längslenker 51.1, 51.2 sind dabei jeweils außenseitig mit der Nabe der jeweiligen Tiefenführungsrolle 9 gekoppelt. Es ist ferner zu erkennen, dass sich die Wippachse W des Wipphebels 50 im Wesentlichen in Bearbeitungsrichtung B erstreckt und durch die Symmetrieebene Y verläuft. Es wird dabei ein spitzer Winkel zwischen der Wippachse W und der Bearbeitungsrichtung B eingeschlossen, vgl. Fig. 18.

In einer in Fig. 13 und 14 dargestellten Neutralstellung erstreckt sich der Wipphebel 50 im Wesentlichen parallel zu der Schwenkachse S. Er ist dabei parallel zu dem Achselement 53 angeordnet. In Fig. 13 ist ferner dargestellt, dass die Schwenkachse S und die Wippachse W orthogonal zueinander verlaufen.

Den Darstellungen in Fig. 7 und 12 ist ferner zu entnehmen, dass der Werkzeugrahmen 7 über eine Parallelogramm-Aufhängung P an dem Werkzeugrahmen 7 angeordnet ist, welche eine Parallelführung der daran angeordneten Bodenbearbeitungswerkzeuge 2 sowie des Bodenbearbeitungsaggregats 3 ermöglicht. In der landwirtschaftlichen Praxis ist in der Regel nicht nur eine Radaufhängung 59 an dem Bodenbearbeitungsgerät 1 vorgesehen, sondern mehrere, quer zu der Bearbeitungsrichtung B nebeneinander angeordnete Radaufhängungen 59.

Das Bodenbearbeitungsaggregat 3 kann im Falle eines Kontakts mit einem Hindernis einerseits ausweichen und andererseits nach Wegfall des Hindernisses unter Federkraft wieder in seine vorbestimmte Position zurückbewegt werden. Dies wird nachfolgend anhand der Darstellungen in Fig. 3 bis 6 sowie 19 und 20 erläutert.

Das Bodenbearbeitungsaggregat 3 ist entgegen der Kraft einer sich spannenden Feder 11 gegenüber dem Werkzeugrahmen 7 bewegbar. Hierdurch ist eine Überlastsicherung gebildet, welche das Bodenbearbeitungsaggregat 3 vor übermäßigen Lasten und daraus resultierenden Beschädigungen schützen kann. Übermäßige Lasten können insbesondere aus der Kollision der Aggregatwerkzeuge 3.1, 3.2 mit Hindernissen, wie bspw. im Boden der Nutzfläche befindlichen Steinen, resultieren.

Im Folgenden wird der konstruktive Aufbau und die Funktionsweise der Überlastsicherung zunächst anhand der Darstellungen in Fig. 4 bis 6 erläutert.

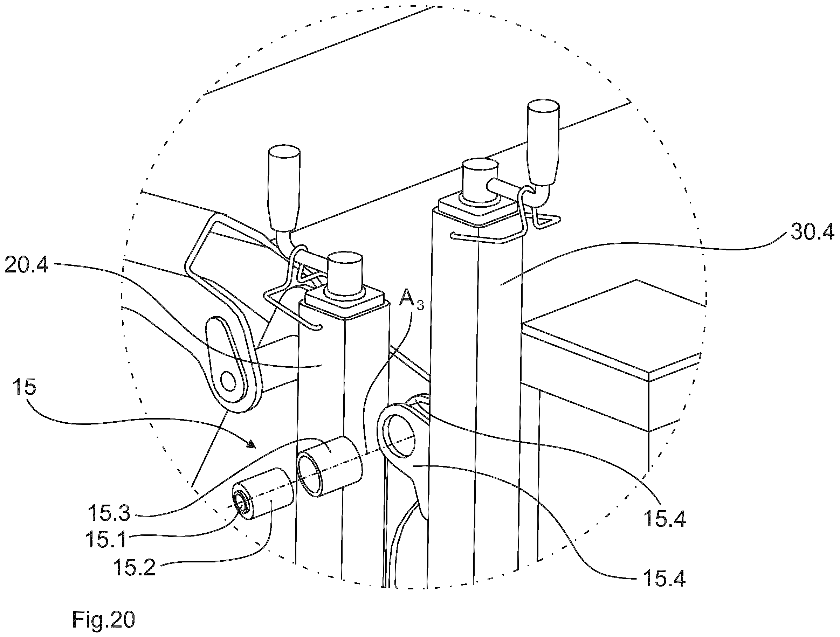

Das gesamte Bodenbearbeitungsaggregat 3 ist über ein Drehlager 15 um eine Schwenkachse A₃ schwenkbar an dem Werkzeugrahmen 7 angeordnet, vgl. Fig. 20 sowie Fig. 4. Die Schwenkachse A₃ erstreckt sich im Wesentlichen quer zu der Bearbeitungsrichtung B, sie kann sich jedoch auch schräg zu der Bearbeitungsrichtung B erstrecken, vgl. Fig. 20. Das Drehlager 15 ist im Bereich des oberen Endes des Werkzeugrahmens 7 angeordnet, so dass das Bodenbearbeitungsaggregat 3 infolge einer Kollision der Aggregatwerkzeuge 3.1, 3.2 mit einem Hindernis entgegen der Bearbeitungsrichtung B nach schräg oben verschwenkt, vgl. Fig. 4 und 5. Durch ein Verschwenken des Bodenbearbeitungsaggregats 3 entgegen der Bearbeitungsrichtung B können die Aggregatwerkzeuge 3.1, 3.2 dem Hindernis ausweichen.

Um das Bodenbearbeitungsaggregat 3 nach dem Hindernis wieder in seine vordefinierte Position zu bewegen, sind zwei im Sinne einer Doppelfeder wirkende Federn 11 vorgesehen, vgl. Fig. 5. Die als Zugfedern ausgebildete Federn 11 übertragen eine Zugkraft auf das sich entgegen der Bearbeitungsrichtung B verschwenkende Bodenbearbeitungsaggregat 3. Die von den Federn 11 aufgebrachte Zugkraft bewirkt eine Rückstellung des Bodenbearbeitungsaggregats 3. Je stärker das Bodenbearbeitungsaggregat 3 verschwenkt ist, umso größer ist die über die Federn 11 aufgebrachte Rückstellkraft.

Neben der Rückstellung des Bodenbearbeitungsaggregats 3 bewirken die Federn 11 auch eine Stabilisierung des Bodenbearbeitungsaggregats 3 gegenüber Erschütterungen und Vibrationen, welche insbesondere bei erhöhten Bearbeitungsgeschwindigkeiten auf unebenen, hindernisreichen Böden auftreten können.

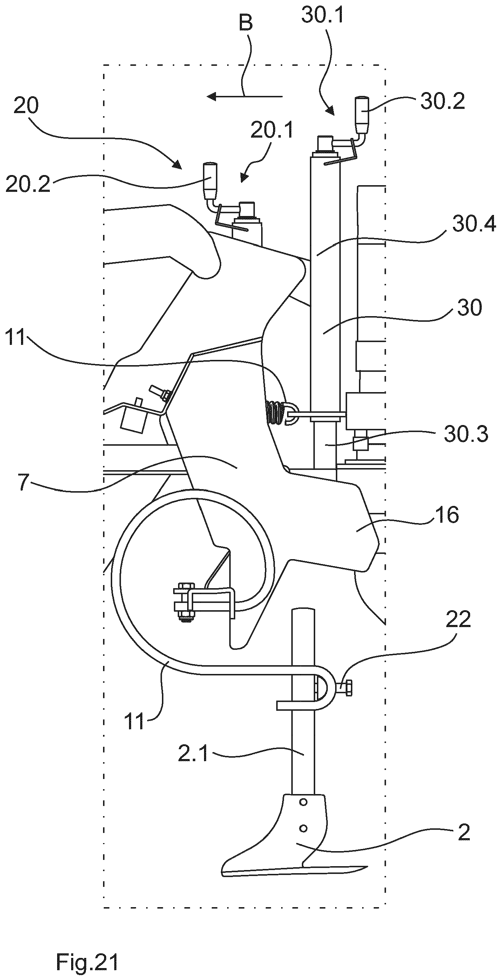

Die Federn 11 sind unterhalb der Schwenkachse A₃ zwischen dem Werkzeugrahmen 7 und dem Bodenbearbeitungsaggregat 3 angeordnet. In einer nicht verschwenkten Normalstellung des Bodenbearbeitungsaggregats 3 erstrecken sich die Federn 11 im Wesentlichen waagerecht und parallel zueinander in Bearbeitungsrichtung B, vgl. Fig. 21. Die Federn 11 sind werkzeugrahmenseitig über Befestigungsmittel lösbar befestigt, vgl. Fig. 21, so dass diese, etwa im Falle eines Defekts, einfach und schnell ausgetauscht werden können.

Auf der Seite des Bodenbearbeitungsaggregats 3 sind die Federn 11 über eine Anbindlasche 31 mit dem unteren Ende eines Hülsenelements 30.4 der Arbeitstiefeneinstellung 30 des Bodenbearbeitungsaggregats 3 verbunden, vgl. Fig. 6. Das Hülsenelement 30.4 der Arbeitstiefeneinstellung 30 ist schwenkfest mit dem Bodenbearbeitungsaggregat 3 gekoppelt. Die symmetrisch aufgebaute, flache Anbindlasche 31 hat eine rechteckige Grundform und weist an ihrer dem Werkzeugrahmen 7 zugewandten Kante zwei sich in Bearbeitungsrichtung B ohrenartig erstreckende Befestigungsbereiche 31.1, 31.2 auf, an welchen die Federn 11 über jeweils eine Durchgangsbohrung befestigt sind, vgl. Fig. 6.

Aufgrund der Anordnung der Federn 11 an dem in vertikaler Richtung unbeweglichen Hülsenelement 30.4 der Arbeitstiefeneinstellung 30 ist sichergestellt, dass unabhängig von der eingestellten Arbeitstiefe T_{A} des Bodenbearbeitungsaggregats 3 stets der gleiche Federangriffspunkt vorliegt. Die Federn 11 wirken unabhängig von der eingestellten Arbeitstiefe T_{A} des Bodenbearbeitungsaggregats 3 als Überlastsicherung.

Zur Führung der Bewegungen des Bodenbearbeitungsaggregats 3 sind zwei flügelartige Führungselemente 16 an dem Werkzeugrahmen 7 vorgesehen, vgl. Fig. 6. Die Führungselemente 16 erstrecken sich entgegen der Bearbeitungsrichtung B schräg in Richtung des Bodenbearbeitungsaggregats 3, so dass diese gemeinsam eine Trichterform bilden, durch welche das Bodenbearbeitungsaggregat 3 zentriert werden kann, vgl. Fig. 6. An dem Antriebsgehäuse 12 des Bodenbearbeitungsaggregats 3 sind zwei Gegenführungselemente 17 angeordnet, welche korrespondierend zu den Führungselementen 16 ausgebildet sind, s. ebenfalls Fig. 6. Die Gegenführungselemente 17 sind in der in Fig. 6 dargestellten Normalstellung des Bodenbearbeitungsaggregats 3 in Kontakt mit den Führungselementen 16 und dem Werkzeugrahmen 7. Die Gegenführungselemente 17 dienen auch als Anschlag zur Begrenzung der Schwenkbewegungen des Bodenbearbeitungsaggregats 3 entgegen der Bearbeitungsrichtung B.

Gemäß dem etwa in den Fig. 1, 3 bis 6 sowie 19 und 20 dargestellten Ausführungsbeispiel wirkt die Überlastsicherung auf das gesamte Bodenbearbeitungsaggregat 3. Aufgrund der an dem Antriebsgehäuse 12 angeordneten Antriebe und der entsprechenden empfindlichen Peripherie hat sich dies auch in der Praxis als zielführend erwiesen. Allerdings kann es alternativ oder zusätzlich wünschenswert sein, dass die einzelnen Schwenkausleger 4.1, 4.2 mit den daran angeordneten Aggregatwerkzeugen 3.1, 3.2 über separate Überlastsicherungen verfügen. Solchen separate Überlastsicherungen können analog der Überlastsicherung des Bodenbearbeitungsaggregats 3 über Federn 11 umgesetzt sein und ein federbelastetes Verschwenken der Schwenkausleger 4.1, 4.2 entgegen der Bearbeitungsrichtung B ermöglichen.

Während der Bodenbearbeitung können auch Belastungen und Störeinflüsse auf das Bodenbearbeitungsaggregat 3 auftreten, welche nicht rein entgegen der Bearbeitungsrichtung B, sondern quer oder schräg dazu wirken. Um auch derartige Kräfte in gewissem Umfang ausgleichen zu können, weist das Drehlager 15 einen stoßdämpfenden Aufbau auf, was nachfolgend mit Bezugnahme auf Fig. 20 erläutert wird.

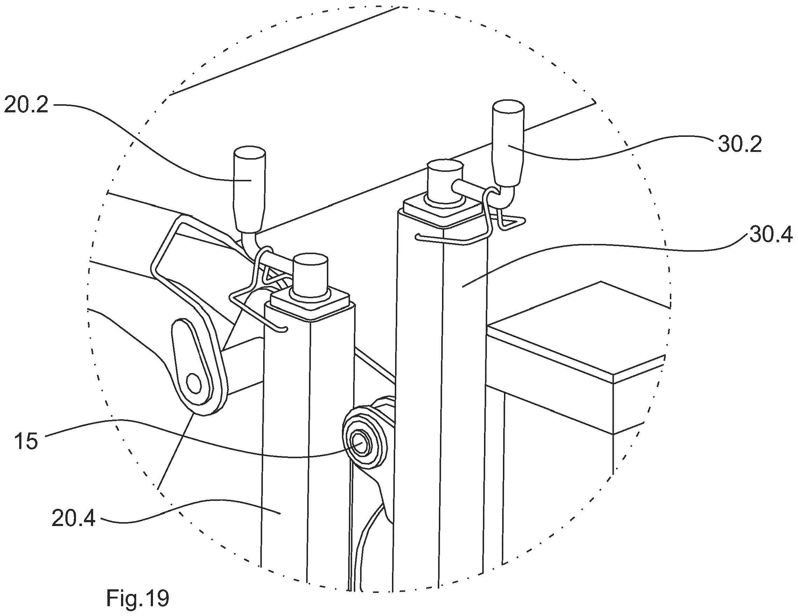

Das Drehlager 15 ist in zwei Lagerbohrungen angeordnet, welche an Lagervorsprüngen 15.4 des Hülsenelements 30.4 der Arbeitstiefeneinstellung 30 vorgesehen sind. Das Drehlager 15 weist eine starre innere zylindrische Buchse 15.1 auf, welche einen Lagerzapfen um die Schwenkachse A drehbar aufnimmt. In radialer Richtung ist die Buchse 15.1 von einem elastischen Lagerelement 15.2 umgeben, vgl. die in Fig. 20 dargestellte Explosionsansicht gemäß Fig. 19. Das elastische Lagerelement 15.2 ist wiederum von einer starren äußeren Hülse 15.3 umgeben, s. ebenfalls Fig. 20. Das elastische Lagerelement 15.2 dieser so genannten Silentbuchse erlaubt sowohl gewisse Kippbewegungen, um kleine kardanische Winkel schräg zu der Schwenkachse A, als auch kleinere Bewegungen entlang der Schwenkachse A. Insbesondere können gewisse Kippbewegungen um die Vertikalachse kompensiert werden. Diese elastischen Ausgleichsbewegungen ermöglichen eine Art schwimmende Lagerung und bieten einen weiteren Schutz des Bodenbearbeitungsaggregats 3 vor Überlastungen aufgrund von Störeinflüssen und damit ggf. einhergehenden Defekten oder Beschädigungen.

In dem Ausführungsbeispiel gemäß Fig. 4 weisen nicht nur die Bodenbearbeitungsaggregate 3, sondern auch die Bodenbearbeitungswerkzeuge 2 Überlastsicherungen auf, worauf nachfolgend kurz anhand der Darstellung in Fig. 4 eingegangen wird.

Anhand der Darstellung in Fig. 4 ist zu erkennen, dass das Bodenbearbeitungswerkzeug 2 über eine S-förmig bzw. spiralförmig ausgebildete Feder 11 an dem Werkzeugrahmen 7 angeordnet ist. Die Feder 11 ist über eine Befestigungsvorrichtung 22 lösbar sowohl mit dem Werkzeugrahmen 7 als auch mit einem das Bodenbearbeitungswerkzeug 2 tragenden Werkzeugträger 2.1 verbunden und sichert das Bodenbearbeitungswerkzeug 2 gegen überhöhte Lasten, etwa in Folge einer Kollision mit einem Hindernis. Hierdurch wird die Gefahr eines Werkzeugbruchs reduziert, vgl. Fig. 21. Das Bodenbearbeitungswerkzeug 2 ist derart mit der Feder 11 verbunden, dass dieses entgegen der Bearbeitungsrichtung B vorgespannt ist. Ferner können über die Feder 11 auf das Bodenbearbeitungswerkzeug 2 einwirkende Erschütterungen und Vibrationen kompensiert werden.

Das Bodenbearbeitungsgerät 1 ermöglicht dem Bedienpersonal eine gezielte, an die jeweiligen Umgebungsbedingungen angepasste Einstellung unterschiedlicher Arbeitstiefen T_{B}, T_{A} für die Bodenbearbeitungswerkzeuge 2 und die Aggregatwerkzeuge 3.1, 3.2, was nachfolgend anhand der Darstellungen in Fig. 4 und 5 sowie 21 bis 26 erläutert wird.

Der Werkzeugrahmen 7 ist über eine Parallelogramm-Aufhängung P mit dem Geräterahmen 8 verbunden, vgl. Fig. 4. Durch Veränderung der Parallellogramm-Aufhängung P über ein Stellelement P.1 lässt sich die Höhe des Werkzeugrahmens 7 gegenüber dem Geräterahmen 8 verändern. Da der Werkzeugrahmen 7 insoweit parallelgeführt ist, ändern sich die räumlichen Ausrichtungen der Bodenbearbeitungswerkzeuge 2 und des Bodenbearbeitungsaggregats 3 bei einer Änderung der Arbeitshöhe des Werkzeugrahmens 7 nicht. Gegenüber der Nutzfläche ist der Werkzeugrahmen 7 durch die Tiefenführungsrolle 9 in der Arbeitshöhe geführt.

Die Bodenbearbeitungswerkzeuge 2 und die Aggregatwerkzeuge 3.1, 3.2 greifen jeweils in einem gewissen Abstand unterhalb der Bodenoberfläche in die Nutzfläche ein, vgl. Fig. 4. Dieser Abstand wird als Arbeitstiefe T_{A}, T_{B} bezeichnet. Grundsätzlich lässt sich die Arbeitstiefe T_{A}, T_{B} der Bodenbearbeitungswerkzeuge 2 und der Aggregatwerkzeuge 3.1, 3.2 gemeinsam über die Parallelogramm-Aufhängung P einstellen.

Bei dem Bodenbearbeitungsgerät 1 sind die Bodenbearbeitungswerkzeuge 2 und die Aggregatwerkzeuge 3.1, 3.2 über gesonderte Arbeitstiefeneinstellungen 20, 30 unabhängig voneinander einstellbar. Die nachfolgenden Erläuterungen beziehen sich auf jeweils ein Bodenbearbeitungswerkzeug 2 und ein Bodenbearbeitungsaggregat 3.

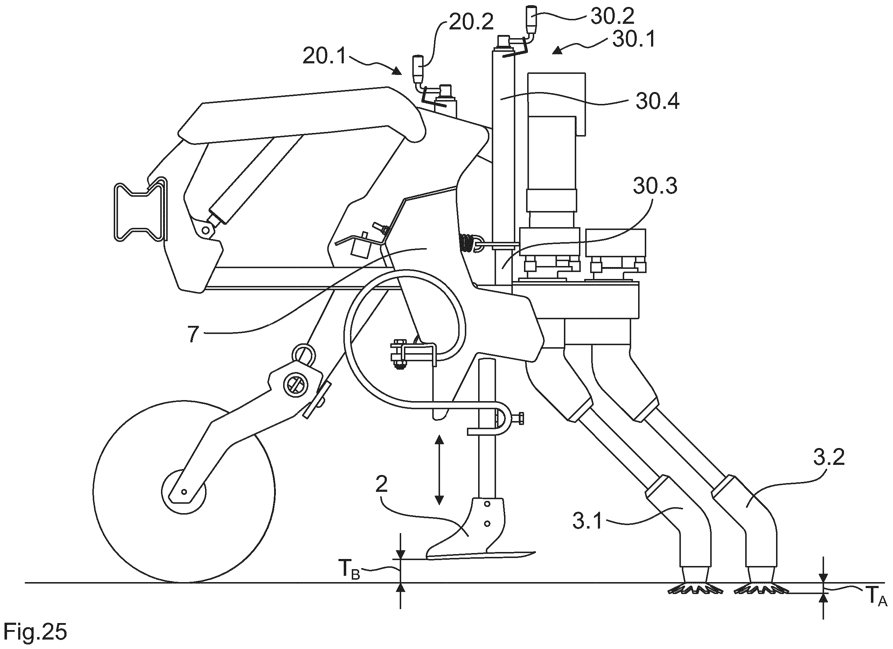

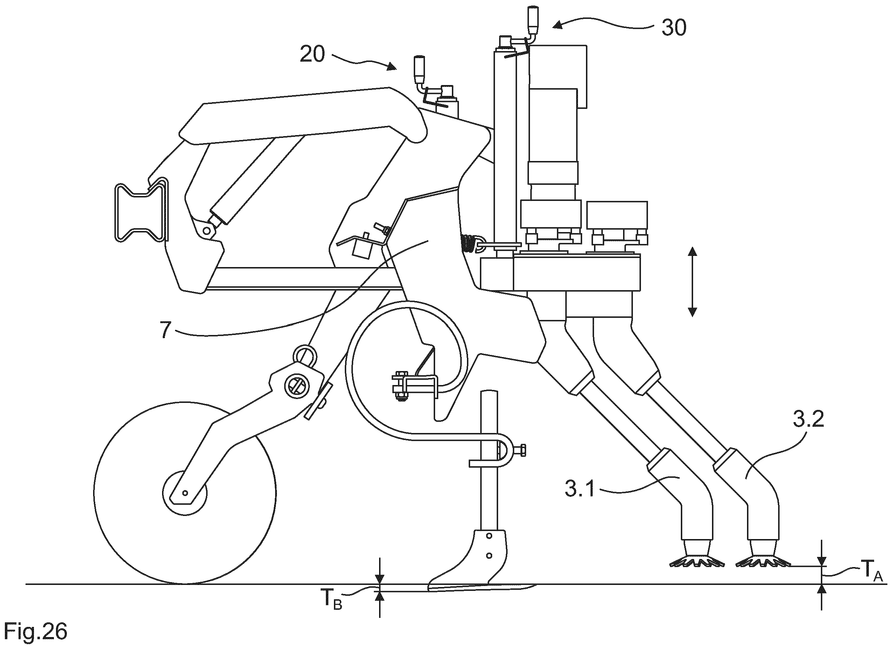

Wie bereits vorstehend erläutert, ist sowohl das Bodenbearbeitungswerkzeug 2 als auch das Bodenbearbeitungsaggregat 3 mit den Aggregatwerkzeugen 3.1, 3.2 an einem Werkzeugrahmen 7 angeordnet, vgl. Fig. 4. Es ist eine Arbeitstiefeneinstellung 20 zur Einstellung der Arbeitstiefe T_{B} des Bodenbearbeitungswerkzeugs 2 vorgesehen, mit welcher das Bodenbearbeitungswerkzeug 2 gegenüber dem Werkzeugrahmen 7 bzw. der Tiefenführungsrolle 9 bewegbar ist, vgl. bspw. Fig. 25 und 26. Auch die Arbeitstiefeneinstellung 30 zur Einstellung der Arbeitstiefe T_{A} der Aggregatwerkzeuge 3.1, 3.2 erlaubt eine Bewegung der Aggregatwerkzeuge 3.1, 3.2 relativ zu dem Werkzeugrahmen 7 bzw. der Tiefenführungsrolle 9.

Nachfolgend wird zunächst anhand der Darstellungen in Fig. 21, 22 und 24 die Ausgestaltung der Arbeitstiefeneinstellung 20 zur Einstellung der Arbeitstiefe T_{B} des Bodenbearbeitungswerkzeugs 2 erläutert.

Anhand der Darstellung in Fig. 21 ist zu erkennen, dass das Bodenbearbeitungswerkzeug 2 über eine S-förmig bzw. spiralförmig ausgebildete Feder 11 an der Arbeitstiefeneinstellung 20 angeordnet ist. Die Feder 11 dient als Überlastsicherung und sicher das Bodenbearbeitungswerkzeug 2 gegen überhöhte Lasten, etwa in Folge einer Kollision mit einem Hindernis. Hierdurch wird die Gefahr eines Werkzeugbruchs reduziert. Das Bodenbearbeitungswerkzeug 2 ist so mit der Feder 11 verbunden, dass dieses entgegen der Bearbeitungsrichtung B vorgespannt ist.

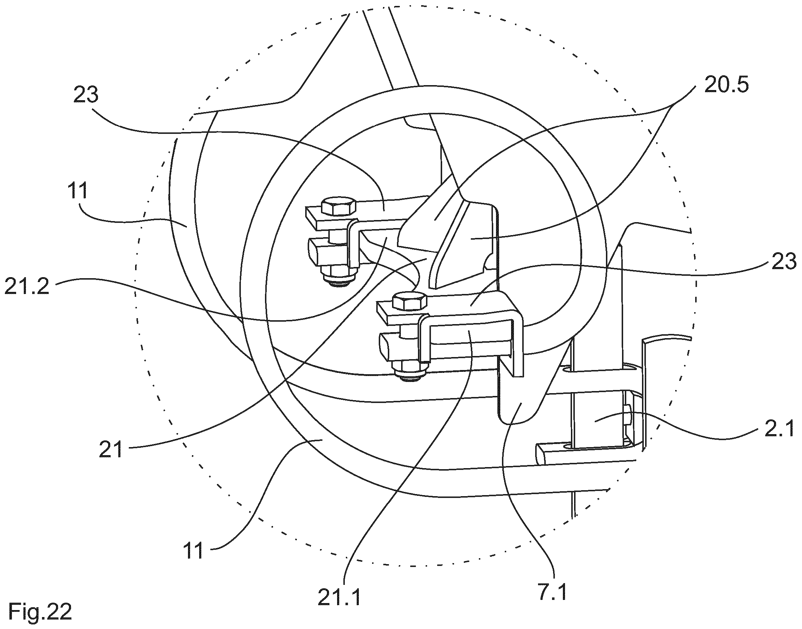

Das Bodenbearbeitungswerkzeug 2 ist über ein sich im Wesentlichen in vertikaler Richtung erstreckenden Werkzeugträger 2.1 mit dem einen Ende der Feder 11 verbunden, vgl. Fig. 21. Die Feder 11 ist über eine lösbare Befestigungsvorrichtung 22 klemmend an dem Werkzeugträger 2.1 befestigt. Das andere Ende der Feder 11 ist über eine lösbare Befestigungsvorrichtung 23 klemmend an einem Anbindblech 21 befestigt, vgl. Fig. 22.

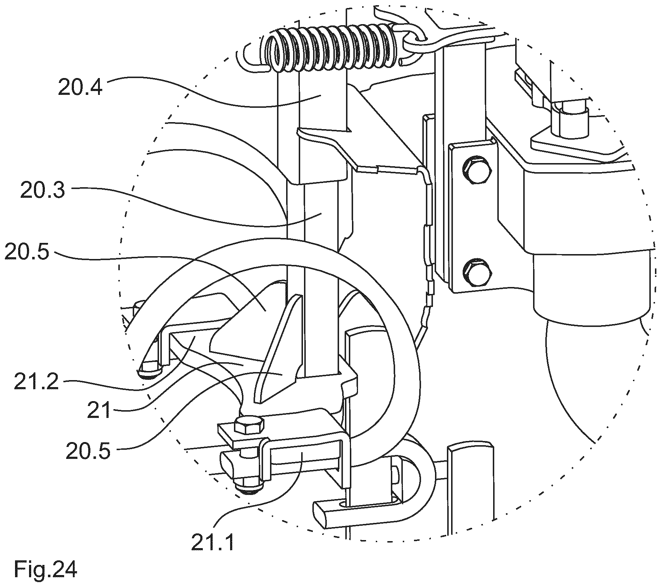

Wie dies der Fig. 24 zu entnehmen ist, sind jeweils zwei Bodenbearbeitungswerkzeuge 2 über jeweils eine Feder 11 an ein und demselben, symmetrisch ausgebildeten Anbindblech 21 angeordnet. Die Federn 11 sind an zwei sich gegenüberliegenden, schenkelartigen Befestigungsabschnitten 21.1, 21.2 des Anbindblechs 21 befestigt. Das Anbindblech 21 ist in einem mittleren Bereich mit der Arbeitstiefeneinstellung 20 verbunden. Hierzu ist das Anbindblech 21 an einem sich im Wesentlichen in vertikaler Richtung erstreckenden Profilelement 20.3 angeordnet. Es sind zwei blechartige Stabilisierungsrippen 20.5 vorgesehen, welche zwischen der Oberseite des Anbindblechs 21 und dem Profilelement 20.3 angeordnet sind.

Da jeweils zwei Bodenbearbeitungswerkzeuge 2 über ein gemeinsames Anbindblech 21 an einem Profilelement 20.3 der Arbeitstiefeneinstellung 20 angeordnet sind, lassen sich die beiden Bodenbearbeitungswerkzeuge 2 gemeinsam über diese Arbeitstiefeneinstellung 20 einstellen. Bei einem größeren Abstand der Pflanzreihen R kann es auch vorteilhaft sein, wenn mehr als zwei Bodenbearbeitungswerkzeuge 2 an einem Profilelement 20.3 angeordnet sind. Es kann auch sinnvoll sein, jeweils mehrere Bodenbearbeitungswerkzeuge 2 gruppenweise über separate Arbeitstiefeneinstellungen 20 einzustellen.

Das Anbindblech 21 wird über die beiden Federn 11 entgegen der Bearbeitungsrichtung B gegen jeweils einen Anlagebereich 7.1 des Werkzeugrahmens 7 gedrückt, vgl. Fig. 22. Hierdurch tritt eine Stabilisierungswirkung ein.

Das Bodenbearbeitungswerkzeug 2 wird zudem auch gegenüber der Parallelogramm-Aufhängung P fixiert.

Das Profilelement 20.3 ist vorliegend als Vierkantprofil ausgeführt und in einem entsprechenden, ebenfalls als Vierkantprofil ausgeführten Hülsenelement 20.4 geführt, vgl. Fig. 24. Im Inneren des Hülsenelements 20.4 ist ein Stellantrieb 20.1 angeordnet, über welchen sich das Profilelement 20.3 relativ zu dem feststehenden Hülsenelement 20.4 verschieben lässt. Der Stellantrieb 20.1 ist vorliegend als Spindelantrieb ausgebildet; er kann jedoch bedarfsweise auch als mechanischer, elektrischer oder hydraulischer Stellantrieb 20.1 ausgebildet sein. An der Oberseite der Arbeitstiefeneinstellung 20 ist ein kurbelartiges Handbedienelement 20.2 vorgesehen, welche mit dem als Spindelantrieb ausgebildeten Stellantrieb 20.1 zusammenwirkt. Durch Betätigen des Handbedienelements 20.2 lässt sich das Profilelement 20.3 in vertikaler Richtung teleskopieren, wodurch sich die Arbeitstiefe T_{B} der Bodenbearbeitungswerkzeuge 2 ändern lässt. Das Handbedienelement 20.2 ist über einen Sicherungsbügel gegen ungewolltes Verstellen, bspw. infolge von Erschütterungen oder Vibrationen, gesichert.

Die Darstellungen in Fig. 25 und 26 zeigen das Bodenbearbeitungswerkzeug 2 in unterschiedlichen Arbeitspositionen. Es lässt sich leicht erkennen, dass über die Arbeitstiefeneinstellung 20 unterschiedliche Abstände des Bodenbearbeitungswerkzeugs 2 gegenüber dem Werkzeugrahmen 7 einstellbar sind. In der Darstellung in Fig. 25 befindet sich das Bodenbearbeitungswerkzeug 2 in einer oberen Anschlagposition, in welcher das Bodenbearbeitungswerkzeug 2 nicht in den Boden der Nutzfläche eingreift. In dieser Position liegt das Anbindblech 21 an einem Anschlag 7.2 an, welcher an dem oberen Ende des Anlagebereichs 7.1 angeordnet ist. In der Darstellung gemäß Fig. 26 befindet sich das Bodenbearbeitungswerkzeug 2 in einer gegenüber der Darstellung in Fig. 25 abgesenkten Arbeitsposition, in welcher das Bodenbearbeitungswerkzeug 2 in den Boden eingreift.

Unabhängig von der Arbeitstiefe T_{B} des Bodenbearbeitungswerkzeugs 2 lässt sich auch die Arbeitstiefe T_{A} der Aggregatwerkzeuge 3.1, 3.2 einstellen, vgl. ebenfalls die Gegenüberstellung von Fig. 25 und 26. In der Darstellung gemäß Fig. 25 befinden sich die Aggregatwerkzeuge 3.1, 3.2 in einer abgesenkten Arbeitsposition, so dass diese in den Boden der Nutzfläche eingreifen können. Völlig unabhängig von der Position der zinkenartigen Bodenbearbeitungswerkzeuge 2 lassen sich die aktiven Aggregatwerkzeuge 3.1, 3.2 über die Arbeitstiefeneinstellung 30 in vertikaler Richtung verschieben und auf diese Weise außer Eingriff mit dem Boden gelangen lassen, vgl. Fig. 26.

Im Folgenden wird die Ausgestaltung der Arbeitstiefeneinstellung 30 zur Einstellung der Arbeitstiefe T_{A} der Aggregatwerkzeuge 3.1, 3.2 des Bodenbearbeitungsaggregat 3 anhand der Darstellungen in Fig. 1, 2 und 21 erläutert.

Das Bodenbearbeitungsaggregat 3 ist in Bearbeitungsrichtung B an der Vorderseite des Antriebsgehäuses 12 an einem Ende eines Profilelements 30.3 der Arbeitstiefeneinstellung 30 angebunden, vgl. Fig. 24. Die schwenkfeste Kopplung des Bodenbearbeitungsaggregats 3 mit der Arbeitstiefeneinstellung 30 erfolgt über lösbare Befestigungsmittel. Das Profilelement 30.3 ist als Vierkantprofil ausgebildet und erstreckt sich im Wesentlichen in vertikaler Richtung. In seinem oberen Bereich ist das Profilelement 30.3 von einem korrespondierend ausgebildeten Hülsenelement 30.4 aufgenommen, vgl. Fig. 4. Im Inneren des Hülsenelements 30.4 ist ein Stellantrieb 30.1 angeordnet, über welchen sich das Profilelement 30.3 gegenüber dem Hülsenelement 30.4 verschieben lässt. Der Stellantrieb 30.1 ist im dargestellten Ausführungsbeispiel als Spindelantrieb ausgebildet; er kann jedoch bedarfsweise auch als mechanischer, elektrischer oder hydraulischer Stellantrieb 30.1 ausgebildet sein. An der Oberseite der Arbeitstiefeneinstellung 30 ist eine Handkurbel als Handbedienelement 30.2 vorgesehen, welche mit dem als Spindelantrieb ausgebildeten Stellantrieb 30.1 zusammenwirkt. Durch Betätigen des Handbedienelements 30.2 lässt sich das Profilelement 30.3 in vertikaler Richtung teleskopieren, wodurch sich das gesamte Bodenbearbeitungsaggregat 3 höhenverstellen lässt und die Arbeitstiefe T_{A} der Aggregatwerkzeuge 3.1, 3.2 einstellbar ist. Die Handkurbel 30.2 ist über einen Sicherungsbügel gegen ungewolltes Verstellen, bspw. infolge von Erschütterungen oder Vibrationen, gesichert.

Auch bei der Arbeitstiefeneinstellung 30 kann ein Anschlag vorgesehen sein, welcher die vertikale Bewegung des Profilelements 30.3 begrenzt und insbesondere eine obere Position für das Bodenbearbeitungsaggregat 3, wie sie in Fig. 26 dargestellt ist, vorgibt.

Das gesamte Bodenbearbeitungsaggregat 3 ist um eine Schwenkachse A₃ schwenkbar an dem Werkzeugrahmen 7 befestigt, vgl. Fig. 5. Hierfür ist ein Drehlager 15 vorgesehen, über welches das Hülsenelement 30.4 an dem Werkzeugrahmen 7 angebunden ist. Die Schwenkbarkeit des Bodenbearbeitungsaggregats 3 um die Schwenkachse A erlaubt eine Überlastsicherung für den Fall, dass die Aggregatwerkzeuge 3.1, 3.2 mit Hindernissen kollidieren.

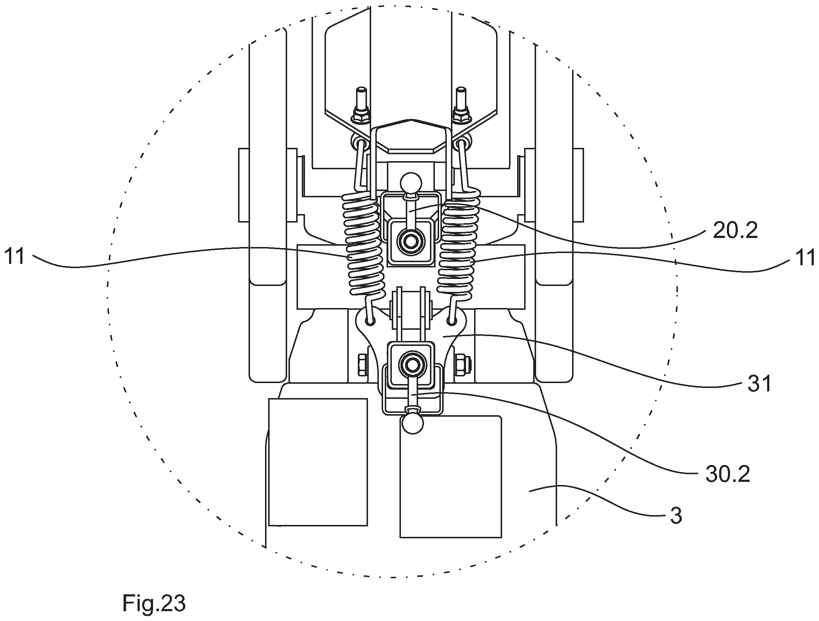

Das Bodenbearbeitungsaggregat 3 ist unterhalb des Drehlagers 15 über zwei Federn 11 mit dem Werkzeugrahmen 7 verbunden, vgl. Fig. 5 und 23. Die Federn 11 sind derart angeordnet, dass diese den Schwenkbewegungen des Bodenbearbeitungsaggregats 3, welche entgegen der Bearbeitungsrichtung B gerichtet sind, eine Rückstellkraft entgegensetzen. Über die Federn 11 kann das Bodenbearbeitungsaggregat 3 auch stabilisiert werden, was insbesondere bei unebenen oder hindernisreichen Böden vorteilhaft ist. Wie dies der Draufsicht in Fig. 23 zu entnehmen ist, erstrecken sich die beiden Federn 11 beidseitig der Arbeitstiefeneinstellung 20 des Bodenbearbeitungswerkzeugs 2. Die als Zugfedern ausgebildeten Federn 11 sind über eine flache Anbindlasche 31 mit dem Hülsenelement 30.4 verbunden und werkzeugrahmenseitig über geeignete Befestigungsmittel angebunden. Zur Führung und Zentrierung des Bodenbearbeitungsaggregats 3 bei den Schwenkbewegungen sind trichterförmige Führungselemente 16 an dem Werkzeugrahmen 7 vorgesehen, vgl. Fig. 5.

Wie bereits in Bezug auf die Bodenbearbeitungswerkzeuge 2 erläutert, kann es sich auch bei den Bodenbearbeitungsaggregaten 3 als vorteilhaft erweisen, mehrere Bodenbearbeitungsaggregate 3 gruppenweise über separate Arbeitstiefeneinstellungen 30 einstellen zu können.

Nachfolgend wird anhand der Darstellungen in Fig. 23 und 25 auf Einzelheiten der Anordnung der Arbeitstiefeneinstellungen 20, 30 relativ zueinander eingegangen.

Wie dies der Fig. 23 entnommen werden kann, ist der Stellantrieb 20.1 der Arbeitstiefeneinstellung 20 der Bodenbearbeitungswerkzeuge 2 in Bearbeitungsrichtung B versetzt vor dem Stellantrieb 30.1 der Arbeitstiefeneinstellung 30 der Aggregatwerkzeuge 3.1, 3.2 angeordnet. Die Stellantriebe 20.1, 30.1 sind in einer sich entlang der Bearbeitungsrichtung B erstreckenden Linie angeordnet.

Anhand der Darstellung in Fig. 25 ist zu erkennen, dass der Stellantrieb 20.1 der Arbeitstiefeneinstellung 20 des Bodenbearbeitungswerkzeugs 2 quer zu der Bearbeitungsrichtung B zumindest teilweise von Elementen des Werkzeugrahmens 7 umfasst ist, vgl. auch Fig. 5. Insbesondere ist diese von einer U-förmigen Aufnahme 18 für die schwenkbare Anordnung der Arbeitstiefeneinstellung 30 der Aggregatwerkzeuge 3.1, 3.2 umgriffen, vgl. Fig. 5.

Ferner sind die Handbedienelemente 20.2, 30.2 auf unterschiedlichen Bedienebenen angeordnet, welche in vertikaler Richtung voneinander beabstandet sind, vgl. Fig. 25. Hierdurch sind beide Handbedienelemente 20.2, 30.2 leicht zugänglich und lassen sich unabhängig voneinander etwa auch gleichzeitig bedienen, ohne dass es zu gegenseitigen Störungen oder Behinderungen kommt.

Über die als Spindelantriebe ausgebildeten Stellantriebe 20.1, 30.1 lässt sich eine präzise Einstellung der Arbeitstiefen T_{B}, T_{A} bewerkstelligen. Insbesondere kann je nach Anzahl der Drehungen des Handbedienelements 20.2, 30.2 eine stufenlose Einstellung der Arbeitstiefen T_{B}, T_{A} erfolgen.

Die Arbeitstiefeneinstellungen 20, 30 können jeweils eine Arbeitstiefenanzeige zur Anzeige der jeweils eingestellten Arbeitstiefe T_{B}, T_{A} aufweisen. Eine solche, in den Figuren nicht dargestellte Arbeitstiefenanzeige kann etwa als Skala an dem Profilelemente 20.3, 30.3 ausgestaltet sein oder als elektronische Arbeitstiefenanzeige. Diese kann bspw. auch mit einer Bordelektronik und entsprechenden Anzeigevorrichtungen der Zugmaschine gekoppelt sein.

Ferner kann eine Arbeitstiefenerfassung vorgesehen sein, mit welcher sich die jeweiligen Arbeitstiefen T_{B}, T_{A} zuverlässig erfassen lassen. Eine solche Arbeitstiefenerfassung kann auch mit einer Arbeitstiefensteuerung gekoppelt sein, über welche sich die Arbeitstiefen T_{B}, T_{A} akkurat steuern lassen. Über eine solche Arbeitstiefensteuerung kann bspw. eine laufende Anpassung der Arbeitstiefen T_{B}, T_{A} während der Bodenbearbeitung durchgeführt werden.

Sowohl das Bodenbearbeitungswerkzeuge 2 als auch die Aggregatwerkzeuge 3.1, 3.2 können auswechselbar an dem Bodenbearbeitungsgerät 1 befestigt sein, was nachfolgend anhand der Darstellung in Fig. 21 erläutert wird.

Das Bodenbearbeitungswerkzeug 2 ist über Befestigungsmittel auswechselbar an dem Werkzeugträger 2.1 befestigt, vgl. Fig. 21. Auf diese Weise kann es, etwa im Falle eines Defekts oder erhöhten Verschleiß, einfach ausgetauscht werden. Auch lassen sich bedienerfreundlich andere Bodenbearbeitungswerkzeuge 2, insbesondere solche mit anderen Wirkformen, an dem Werkzeugträger 2.1 anbringen.

Das vorstehend beschriebene Bodenbearbeitungsgerät 1 ermöglicht eine zuverlässige mechanische Bodenbearbeitung zwischen den Nutzpflanzen N einer Pflanzreihe R durch die von dem Werkzeugantrieb 6 angetriebenen Aggregatwerkzeuge 3.1, 3.2.

### Bezugszeichen:

- 1: Bodenbearbeitungsgerät
- 2: Bodenbearbeitungswerkzeug
- 2.1: Werkzeugträger
- 3: Bodenbearbeitungsaggregat
- 3.1: Aggregatwerkzeug
- 3.2: Aggregatwerkzeug
- 4.1: Schwenkausleger
- 4.2: Schwenkausleger
- 5.1: Schwenkantrieb
- 5.2: Schwenkantrieb
- 6: Werkzeugantrieb
- 7: Werkzeugrahmen
- 7.1: Anlagebereich
- 8: Geräterahmen
- 9: Tiefenführungsrolle
- 10.1: Antriebswelle
- 10.2: Antriebswelle
- 10.3: Antriebswellensegment
- 10.4: Umlenkungsgetriebe
- 11: Feder
- 12: Antriebsgehäuse
- 13: Getriebe
- 14: Steuerung
- 15: Drehlager
- 15.1: Buchse
- 15.2: Lagerelement
- 15.3: Hülse
- 15.4: Lagervorsprung
- 16: Führungselement
- 17: Gegenführungselement
- 18: Aufnahme
- 20: Arbeitstiefeneinstellung
- 20.1: Stellantrieb
- 20.2: Handbedienelement
- 20.3: Profilelement
- 20.4: Hülsenelement
- 20.5: Stabilisierungsrippe
- 21: Anbindblech
- 21.1: Befestigungsabschnitt
- 21.2: Befestigungsabschnitt
- 22: Befestigungsvorrichtung
- 23: Befestigungsvorrichtung

- 30: Arbeitstiefeneinstellung
- 30.1: Stellantrieb
- 30.2: Handbedienelement
- 30.3: Profilelement
- 30.4: Hülsenelement
- 31: Anbindlasche
- 31.1: Befestigungsbereich
- 31.2: Befestigungsbereich

- 40: Schnellkupplung
- 41: Befestigungsschnittstelle
- 42: Antriebsschnittstelle
- 43: Buchse
- 43.1: Halbschale
- 43.2: Halbschale
- 44: Stecker
- 45: Kupplungshilfe
- 46: Klemmelement
- 47: Ausnehmung
- 48: Steckaufnahme
- 49: Steckansatz
- 50: Wipphebel
- 50.1: Drehpunkt
- 51.1: Längslenker
- 51.2: Längslenker
- 52.1: Buchse
- 52.2: Buchse
- 53: Achselement
- 54.1: Führungsausnehmung
- 54.2: Führungsausnehmung
- 55.1: Führungsvorsprung
- 55.2: Führungsvorsprung
- 56: Arretierelement
- 57: Schwenkanschlag
- 58: Tragarm
- 59: Radaufhängung
- 60: Zugmaschine

- A₁: Schwenkachse
- A₂: Schwenkachse
- A₃: Schwenkachse
- B: Bearbeitungsrichtung
- M: Lochmuster
- N: Nutzpflanze
- O: Pflanzensensor
- P: Parallelogramm-Aufhängung
- P.1: Stellelement
- R: Pflanzreihe
- S: Schwenkachse
- T_{A}: Arbeitstiefe (Aggregatwerkzeuge)
- T_{B}: Arbeitstiefe (Bodenbearbeitungswerkzeuge)
- U: Spurweite
- W: Wippachse
- Y: Symmetrieebene
- Z: Zentrierelement

## Patentansprüche

1. Bodenbearbeitungsgerät zur Bodenbearbeitung zwischen in Pflanzreihen (R) angebauten Nutzpflanzen (N), mit mindestens einem Bodenbearbeitungsaggregat (3) zur Bodenbearbeitung innerhalb der Pflanzreihen (R), welches zwei über Schwenkausleger (4.1, 4.2) quer zu den Pflanzreihen (R) verschwenkbare Aggregatwerkzeuge (3.1, 3.2) aufweist, denen jeweils ein separater Schwenkantrieb (5.1, 5.2) zugeordnet ist,
**dadurch gekennzeichnet,**
**dass** das Bodenbearbeitungsaggregat (3) einen Werkzeugantrieb (6) zum Antrieb der Aggregatwerkzeuge (3.1, 3.2) aufweist.

2. Bodenbearbeitungsgerät nach Anspruch 1, **dadurch gekennzeichnet, dass** die Aggregatwerkzeuge (3.1, 3.2) über den Werkzeugantrieb (6) drehend, insbesondere gegensinnig drehend, antreibbar sind.

3. Bodenbearbeitungsgerät nach Anspruch 2, **dadurch gekennzeichnet, dass** sich die Drehachsen (D₁, D₂) der Aggregatwerkzeuge (3.1, 3.2) im Wesentlichen vertikal erstrecken.

4. Bodenbearbeitungsgerät nach einem der vorhergehenden Ansprüche, **dadurch gekennzeichnet, dass** die Aggregatwerkzeuge (3.1, 3.2) über an den Schwenkauslegern (4.1, 4.2) angeordnete Antriebswellen (10.1, 10.2) mit dem Werkzeugantrieb (6) wirkverbunden sind.

5. Bodenbearbeitungsgerät nach Anspruch 4, **dadurch gekennzeichnet, dass** die Antriebswellen (10.1, 10.2) von den Schwenkauslegern (4.1, 4.2) zumindest teilweise aufgenommen sind.

6. Bodenbearbeitungsgerät nach einem der vorhergehenden Ansprüche, **dadurch gekennzeichnet, dass** die Aggregatwerkzeuge (3.1, 3.2) über die Schwenkausleger (4.1, 4.2) unabhängig voneinander verschwenkbar sind.

7. Bodenbearbeitungsgerät nach einem der vorhergehenden Ansprüche, **gekennzeichnet durch** mehrere, entlang der Bearbeitungsrichtung (B) gezogene, zwischen den Pflanzreihen (R) in den Boden eingreifende Bodenbearbeitungswerkzeuge (2).

8. Bodenbearbeitungsgerät nach Anspruch 7, **dadurch gekennzeichnet, dass** das Bodenbearbeitungsaggregat (3) als eine in Bearbeitungsrichtung (B) hinter den Bodenbearbeitungswerkzeugen (2) angeordnete Montageeinheit ausgebildet ist.

9. Bodenbearbeitungsgerät nach einem der vorhergehenden Ansprüche, **dadurch gekennzeichnet, dass** die Aggregatwerkzeuge (3.1, 3.2) über eine Schnellkupplung (40) auswechselbar an dem Bodenbearbeitungsaggregat (3) angeordnet sind.

10. Bodenbearbeitungsgerät nach einem der vorhergehenden Ansprüche, **dadurch gekennzeichnet, dass** die Bodenbearbeitungswerkzeuge (2) und die Aggregatwerkzeuge (3.1, 3.2) an einem Werkzeugrahmen (7) angeordnet sind, welcher über eine Parallelogramm-Aufhängung (P) mit einem Geräterahmen (8) gekoppelt ist.

11. Bodenbearbeitungsgerät nach Anspruch 10, **dadurch gekennzeichnet, dass** der Werkzeugrahmen (7) über mehrere Tiefenführungsrollen (9) gegenüber dem Boden abgestützt ist und die Tiefenführungsrollen (9) zum Ausgleich von Bodenunebenheiten gegenüber dem Werkzeugrahmen (7) verschwenkbar angeordnet sind, wobei zwei benachbarte Tiefenführungsrollen (9) über einen Wipphebel (50) mechanisch miteinander gekoppelt und gegenüber dem Werkzeugrahmen (7) pendelnd angeordnet sind.

12. Bodenbearbeitungsgerät nach einem der Ansprüche 10 oder 11, **dadurch gekennzeichnet, dass** das Bodenbearbeitungsaggregat (3) entgegen der Kraft einer sich spannenden Feder (11) gegenüber dem Werkzeugrahmen (7) bewegbar angeordnet ist.

13. Bodenbearbeitungsgerät nach einem der Ansprüche 7 bis 12, **dadurch gekennzeichnet, dass** die Bodenbearbeitungswerkzeuge (2) und die Aggregatwerkzeuge (3.1, 3.2) über gesonderte Arbeitstiefeneinstellungen (20, 30) unabhängig voneinander einstellbar sind.

14. Bodenbearbeitungsgerät nach einem der vorhergehenden Ansprüche, **gekennzeichnet durch** einen Pflanzensensor (O) zur Erfassung der Pflanzreihen (R) und/oder der Nutzpflanzen (N) und/oder von zwischen den Nutzpflanzen (N) wachsendem Unkraut.

15. Bodenbearbeitungsgerät nach Anspruch 14, **dadurch gekennzeichnet, dass** der Pflanzensensor (O) mit einer Steuerung (14) der Schwenkantriebe (4.1, 4.2) gekoppelt ist.
